# EUROPEAN PATENT APPLICATION

(11) **EP 4 614 874 A1**
(43) Date of publication of application: **10.09.2025**
(21) Application number: 23884853.5
(22) Date of filing: 30.10.2023
(51) Int. Cl.: H04L 9/32

(54) **COMMUNICATION METHOD AND COMMUNICATION APPARATUS**

(30) Priority: 04.11.2022 CN 202211378354
(71) Applicant: Huawei Technologies Co., Ltd., Shenzhen, Guangdong 518129 (CN)
(72) Inventor: LI, Lun, Shenzhen, Guangdong 518129 (CN); GUO, Yanfei, Shenzhen, Guangdong 518129 (CN); WU, Yizhuang, Shenzhen, Guangdong 518129 (CN); LI, He, Shenzhen, Guangdong 518129 (CN)
(74) Representative: Epping - Hermann - Fischer
(86) International application number: PCT/CN2023/127793
(87) International publication number: WO 2024/093923

(57) **Abstract**

A communication method is disclosed and includes: Before a certificate application network element sends a certificate application message to a certificate enrolment network element to apply for a certificate on behalf of a first network element, initial trust is established between the certificate application network element and the certificate enrolment network element. Specifically, a management network element needs to assist in establishing the initial trust between the certificate application network element and the certificate enrolment network element. Therefore, the certificate enrolment network element issues the certificate to the first network element when determining that the certificate application network element is a trusted network element, to ensure security of a certificate issuing process.

## Description

This application claims priority to Chinese Patent Application No. 202211378354.0, filed with the China National Intellectual Property Administration on November 4, 2022 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

A certificate enrolment and management framework (Certificate Enrolment and Management Framework, CEMAF) is defined in a certificate management-related subject in the 3rd generation partnership project (3rd Generation Partnership Project, 3GPP). The CEMAF includes a certificate management network element (Certificate management Function, CeMF), a certificate enrolment network element (Certificate enrolment Function, CeEF), and a function network element (network function, NF) that needs to request a service certificate. Specifically, a communication interface between the NF and the CeEF is configured to register a program related to certificate provisioning and update, and a communication interface between the NF and the CeMF is configured to check a certificate status.

However, for a certificate management framework including the CeEF and the CeMF, how to set up a secure certificate application protocol based on the framework is not determined yet.

### SUMMARY

This application provides a communication method, and proposes an initial trust establishment procedure for a certificate management framework including a CeEF and a CeMF, to implement security protection over certificate enrolment.

According to a first aspect, a communication method is provided, including: A certificate application network element sends a first request message to a certificate enrolment network element, where the first request message is used to request to authenticate the certificate application network element, the first request message includes an identity of the certificate application network element and first information, and the first information is used to authenticate the certificate application network element; the certificate enrolment network element sends a second request message to a management network element, where the second request message is used to request to verify the first information, and the second request message includes the first information; the management network element verifies the first information based on second information locally recorded by the management network element, where the second information is information related to the certificate application network element; the management network element sends first indication information to the certificate enrolment network element, where the first indication information indicates whether the first information is successfully verified; and the certificate enrolment network element determines, based on the first indication information, whether the certificate application network element is a trusted network element.

Based on the solution, the certificate enrolment network element verifies the certificate application network element through the management network element, to determine whether the certificate application network element is a trusted network element. Therefore, when the certificate application network element is successfully verified (for example, the certificate application network element is a trusted network element), the certificate enrolment network element may accept a certificate enrolment application of the certificate application network element, and issue a certificate to a network element to which the certificate needs to be issued. In other words, before the certificate is issued, trust is established between the certificate enrolment network element and the certificate application network element, thereby implementing security protection over certificate enrolment.

In addition, it should be noted that, in the solution, the certificate enrolment network element requests the management network element to assist in completing the verification on the certificate application network element, and the management network element may complete the verification by using locally recorded information related to the certificate application network element (for example, initialization information of the certificate application network element, configuration information of the certificate application network element, or management information of the certificate application network element), so that the verification can be completed without performing additional information configuration.

With reference to the first aspect, in some implementations of the first aspect, the first information includes at least one of the following information: a network element identity list, a domain identity, or an initialization certificate list, where the network element identity list indicates at least one network element managed by the certificate application network element, the domain identity indicates a domain in which the certificate application network element is located, and the initialization certificate list indicates at least one initialization certificate configured for the at least one network element managed by the certificate application network element.

Based on the solution, information that is used to assist in the verification and that is carried in a message from the certificate application network element for requesting to verify the certificate application network element may have a plurality of possibilities, to improve flexibility of the solution.

With reference to the first aspect, in some implementations of the first aspect, that the certificate enrolment network element determines, based on the first indication information, whether the certificate application network element is a trusted network element includes: When the first indication information indicates that the first information is successfully verified, the certificate enrolment network element determines that the certificate application network element is a trusted network element; or when the first indication information indicates that the first information fails to be verified, the certificate enrolment network element determines that the certificate application network element is an untrusted network element.

With reference to the first aspect, in some implementations of the first aspect, the first indication information further includes a signature of the management network element, and the signature of the management network element is used to verify whether the first indication information is trustworthy.

Based on the solution, the first indication information sent by the management network element to the certificate enrolment network element may carry the signature of the management network element, so that the certificate enrolment network element can verify, based on the signature of the management network element, whether the first indication information is trustworthy, to improve information transmission security.

With reference to the first aspect, in some implementations of the first aspect, the method further includes: The certificate enrolment network element sends a first response message to the certificate application network element, where the first response message indicates whether the certificate application network element is a trusted network element of the certificate enrolment network element.

Based on the solution, the certificate enrolment network element may notify the certificate application network element of a verification result by using the first response message, to avoid a waste of resources caused by repeatedly applying for the verification because the certificate application network element cannot learn the verification result in time.

With reference to the first aspect, in some implementations of the first aspect, the method further includes: A first network element sends a service certificate request message to the certificate application network element, where the service certificate request message is used to request the certificate application network element to apply for a service certificate on behalf of the first network element; and the certificate application network element determines, according to a rule, whether to respond to a request of the first network element for applying for a service certificate.

Based on the solution, after receiving the service certificate request message from the first network element, the certificate application network element may determine, according to a locally preconfigured rule, whether to apply for a certificate from the certificate enrolment network element on behalf of the first network element, to avoid a waste of resources caused by the certificate application network element still applying for the certificate from the certificate enrolment network element on behalf of the first network element when the application of the first network element is inappropriate (for example, a type of the applied certificate is inappropriate).

With reference to the first aspect, in some implementations of the first aspect, the service certificate request message includes an identity of the first network element and at least one of the following information: a public key corresponding to the first network element, a private key corresponding to the first network element, an initialization certificate configured for the first network element, or service type indication information.

With reference to the first aspect, in some implementations of the first aspect, the method further includes: The certificate application network element sends a failure indication to the first network element, where the failure indication indicates that the request of the first network element for applying for a service certificate is invalid; or the certificate application network element sends a service certificate application message to the certificate enrolment network element, where the service certificate application message is used to request the certificate enrolment network element to issue the service certificate.

With reference to the first aspect, in some implementations of the first aspect, when a type of the service certificate requested by using the service certificate request message is a first type, that the certificate application network element determines, according to the rule, whether to respond to the request of the first network element for applying for a service certificate includes: The certificate application network element verifies, according to the rule, whether the first network element can apply for a service certificate of the first type; and when the verification fails, the certificate application network element sends the failure indication to the first network element.

With reference to the first aspect, in some implementations of the first aspect, the service certificate application message includes the identity of the certificate application network element and at least one of the following information: the public key corresponding to the first network element, the private key corresponding to the first network element, the initialization certificate configured for the first network element, the identity of the first network element, or a signature of the certificate application network element.

With reference to the first aspect, in some implementations of the first aspect, when the first information is the network element identity list, and an identity that is of one or more network elements managed by the certificate application network element and that is locally recorded by the management network element constitutes the network element identity list, the management network element determines that the first information is successfully verified; or when the first information is the initialization certificate list, an initialization certificate that corresponds to one or more network elements managed by the certificate application network element and that is locally recorded by the management network element constitutes the initialization certificate list, and all initialization certificates in the initialization certificate list are valid, the management network element determines that the first information is successfully verified; or when the first information is the domain identity, and an identity that is of the domain to which the certificate application network element belongs and that is locally recorded by the management network element is the domain identity, the management network element determines that the first information is successfully verified.

Based on the solution, the management network element may verify the information from the certificate application network element in different manners, to improve flexibility of the solution.

According to a second aspect, a communication method is provided. The method may be performed by a certificate enrolment network element, or may be performed by a chip or a circuit configured in the certificate enrolment network element. This is not limited in this application. For convenience, an example in which the method is performed by the certificate enrolment network element is used below for description.

The communication method includes: The certificate enrolment network element receives a first request message from a certificate application network element, where the first request message is used to request to authenticate the certificate application network element, the first request message includes an identity of the certificate application network element and first information, and the first information is used to authenticate the certificate application network element; the certificate enrolment network element sends a second request message to a management network element, where the second request message is used to request to verify the first information, and the second request message includes the first information; the certificate enrolment network element receives first indication information from the management network element, where the first indication information indicates whether the first information is successfully verified; and the certificate enrolment network element determines, based on the first indication information, whether the certificate application network element is a trusted network element.

With reference to the second aspect, in some implementations of the second aspect, the first information includes at least one of the following information: a network element identity list, a domain identity, or an initialization certificate list, where the network element identity list indicates at least one network element managed by the certificate application network element, the domain identity indicates a domain in which the certificate application network element is located, and the initialization certificate list indicates at least one initialization certificate configured for the at least one network element managed by the certificate application network element.

With reference to the second aspect, in some implementations of the second aspect, that the certificate enrolment network element determines, based on the first indication information, whether the certificate application network element is a trusted network element includes: When the first indication information indicates that the first information is successfully verified, the certificate enrolment network element determines that the certificate application network element is a trusted network element; or when the first indication information indicates that the first information fails to be verified, the certificate enrolment network element determines that the certificate application network element is an untrusted network element.

With reference to the second aspect, in some implementations of the second aspect, the first indication information further includes a signature of the management network element, and the signature of the management network element is used to verify whether the first indication information is trustworthy.

With reference to the second aspect, in some implementations of the second aspect, the method further includes: The certificate enrolment network element sends a first response message to the certificate application network element, where the first response message indicates whether the certificate application network element is a trusted network element of the certificate enrolment network element.

For technical effects of the method shown in the second aspect and the possible designs of the second aspect, refer to the technical effects in the first aspect and the possible designs of the first aspect.

According to a third aspect, a communication method is provided. The method may be performed by a certificate application network element, or may be performed by a chip or a circuit configured in the certificate application network element. This is not limited in this application. For convenience, an example in which the method is performed by the certificate application network element is used below for description.

The communication method includes: The certificate application network element sends a first request message to a certificate enrolment network element, where the first request message is used to request to authenticate the certificate application network element, the first request message includes an identity of the certificate application network element and first information, and the first information is used to authenticate the certificate application network element; and the certificate application network element receives a first response message from the certificate enrolment network element, where the first response message indicates whether the certificate application network element is a trusted network element, the certificate enrolment network element determines, based on first indication information, whether the certificate application network element is a trusted network element, and the first indication information is feedback information in which the certificate enrolment network element requests a management network element to verify the first information.

With reference to the third aspect, in some implementations of the third aspect, the first information includes at least one of the following information: a network element identity list, a domain identity, or an initialization certificate list, where the network element identity list indicates at least one network element managed by the certificate application network element, the domain identity indicates a domain in which the certificate application network element is located, and the initialization certificate list indicates at least one initialization certificate configured for the at least one network element managed by the certificate application network element.

With reference to the third aspect, in some implementations of the third aspect, the method further includes: The certificate application network element receives a service certificate request message from a first network element, where the service certificate request message is used to request the certificate application network element to apply for a service certificate on behalf of the first network element; and the certificate application network element determines, according to a rule, whether to respond to a request of the first network element for applying for a service certificate.

With reference to the third aspect, in some implementations of the third aspect, the service certificate request message includes an identity of the first network element and at least one of the following information: a public key corresponding to the first network element, a private key corresponding to the first network element, an initialization certificate configured for the first network element, or service type indication information.

With reference to the third aspect, in some implementations of the third aspect, the method further includes: The certificate application network element sends a failure indication to the first network element, where the failure indication indicates that the request of the first network element for applying for a service certificate is invalid; or the certificate application network element sends a service certificate application message to the certificate enrolment network element, where the service certificate application message is used to request the certificate enrolment network element to issue the service certificate.

With reference to the third aspect, in some implementations of the third aspect, the service certificate application message includes an identity of the certificate application network element and at least one of the following information: the public key corresponding to the first network element, the private key corresponding to the first network element, the initialization certificate configured for the first network element, the identity of the first network element, or a signature of the certificate application network element.

For technical effects of the method shown in the third aspect and the possible designs of the third aspect, refer to the technical effects in the first aspect and the possible designs of the first aspect.

According to a fourth aspect, a communication method is provided. The method may be performed by a management network element, or may be performed by a chip or a circuit configured in the management network element. This is not limited in this application. For convenience, an example in which the method is performed by the management network element is used below for description.

The communication method includes: The management network element receives a second request message from a certificate enrolment network element, where the second request message is used to request to verify first information, and the second request message includes the first information; the management network element verifies the first information based on second information locally recorded by the management network element, where the second information is information related to the certificate application network element; and the management network element sends first indication information to the certificate enrolment network element, where the first indication information indicates whether the first information is successfully verified.

With reference to the fourth aspect, in some implementations of the fourth aspect, the first information includes at least one of the following information: a network element identity list, a domain identity, or an initialization certificate list, where the network element identity list indicates at least one network element managed by the certificate application network element, the domain identity indicates a domain in which the certificate application network element is located, and the initialization certificate list indicates at least one initialization certificate configured for the at least one network element managed by the certificate application network element.

With reference to the fourth aspect, in some implementations of the fourth aspect, when the first information is the network element identity list, and an identity that is of one or more network elements managed by the certificate application network element and that is locally recorded by the management network element constitutes the network element identity list, the management network element determines that the first information is successfully verified; or when the first information is the initialization certificate list, an initialization certificate that corresponds to one or more network elements managed by the certificate application network element and that is locally recorded by the management network element constitutes the initialization certificate list, and all initialization certificates in the initialization certificate list are valid, the management network element determines that the first information is successfully verified; or when the first information is the domain identity, and an identity that is of the domain to which the certificate application network element belongs and that is locally recorded by the management network element is the domain identity, the management network element determines that the first information is successfully verified.

With reference to the fourth aspect, in some implementations of the fourth aspect, the first indication information further includes a signature of the management network element, and the signature of the management network element is used to verify whether the first indication information is trustworthy.

For technical effects of the method shown in the fourth aspect and the possible designs of the fourth aspect, refer to the technical effects in the first aspect and the possible designs of the first aspect.

According to a fifth aspect, a communication method is provided, including: A certificate application network element receives a service certificate request message from a first network element, where the service certificate request message is used to request the certificate application network element to apply for a service certificate on behalf of the first network element; the certificate application network element sends a third request message to a management network element, where the third request message is used to request the management network element to verify whether the certificate application network element can apply for a service certificate on behalf of the first network element; the management network element verifies, based on second information locally recorded by the management network element, whether the certificate application network element can apply for a service certificate on behalf of the first network element, where the second information is information related to the certificate application network element; and the management network element sends second indication information to the certificate application network element, where the second indication information indicates whether the certificate application network element can apply for a service certificate on behalf of the first network element, the second indication information includes a signature of the management network element and an event identity, the signature of the management network element is a signature based on the event identity, and the event identity identifies that the certificate application network element applies for a service certificate on behalf of the first network element.

Based on the solution, after receiving the service certificate request message from the first network element, the certificate application network element may verify, through the management network element, whether the certificate application network element can apply to a certificate enrolment network element for a service certificate on behalf of the first network element. In other words, in this technical solution, before requesting the certificate enrolment network element to issue a certificate, the certificate application network element determines, through the management network element, whether a certificate enrolment application can be performed, to avoid initiating a service certificate enrolment application when the first network element has no permission to apply for a network element certificate of a type, so as to implement security protection over certificate enrolment.

With reference to the fifth aspect, in some implementations of the fifth aspect, the method further includes: The certificate application network element sends a service certificate application message to a certificate enrolment network element, where the service certificate application message is used to request the certificate enrolment network element to issue the service certificate to the first network element, and the service certificate application message includes an identity of the certificate application network element and the signature of the management network element.

With reference to the fifth aspect, in some implementations of the fifth aspect, the method further includes: The certificate enrolment network element sends a query message to the management network element, where the query message is used to query whether the certificate application network element can apply for a service certificate on behalf of the first network element, and the query message includes the identity of the certificate application network element and the event identity; and the certificate enrolment network element receives a query response message sent by the management network element, where the query response message indicates whether the certificate application network element can apply for a service certificate on behalf of the first network element.

Based on the solution, before issuing a certificate, the certificate enrolment network element may query, by using the query message, the management network element whether the certificate application network element can apply for a service certificate on behalf of the first network element, to avoid issuing the certificate when the first network element has no permission to apply for a network element certificate of a type.

With reference to the fifth aspect, in some implementations of the fifth aspect, when the third request message includes an identity of the first network element, the management network element verifying whether the certificate application network element can apply for a service certificate on behalf of the first network element includes: when an identity that is of one or more network elements managed by the certificate application network element and that is locally recorded by the management network element includes the identity of the first network element, the management network element determines that the certificate application network element can apply for a service certificate on behalf of the first network element; or when the second request message includes an initialization certificate corresponding to the first network element, the management network element verifying whether the certificate application network element can apply for a service certificate on behalf of the first network element includes: when an initialization certificate that corresponds to one or more network elements managed by the certificate application network element and that is locally recorded by the management network element includes the initialization certificate corresponding to the first network element, the management network element determines that the certificate application network element can apply for a service certificate on behalf of the first network element.

Based on the solution, the management network element may verify, in different verification manners, whether the certificate application network element can apply for a service certificate on behalf of the first network element, to improve flexibility of the solution.

According to a sixth aspect, a communication method is provided. The method may be performed by a certificate enrolment network element, or may be performed by a chip or a circuit configured in the certificate enrolment network element. This is not limited in this application. For convenience, an example in which the method is performed by the certificate enrolment network element is used below for description.

The communication method includes: The certificate enrolment network element receives a service certificate application message from a certificate application network element, where the service certificate application message is used to request the certificate enrolment network element to issue a service certificate, and the service certificate application message includes an identity of the certificate application network element and a signature of a management network element; and the certificate enrolment network element issues the service certificate to a first network element, where the signature of the management network element is a signature based on an event identity, and the event identity identifies that the certificate application network element requests to apply for a service certificate on behalf of the first network element.

With reference to the sixth aspect, in some implementations of the sixth aspect, the method further includes: The certificate enrolment network element sends a query message to the management network element, where the query message is used to query whether the certificate application network element can apply for a service certificate on behalf of the first network element, and the query message includes the identity of the certificate application network element and the event identity; and the certificate enrolment network element receives a query response message sent by the management network element, where the query response message indicates whether the certificate application network element can apply for a service certificate on behalf of the first network element.

For technical effects of the method shown in the sixth aspect and the possible designs of the sixth aspect, refer to the technical effects in the fifth aspect and the possible designs of the fifth aspect.

According to a seventh aspect, a communication method is provided. The method may be performed by a certificate application network element, or may be performed by a chip or a circuit configured in the certificate application network element. This is not limited in this application. For convenience, an example in which the method is performed by the certificate application network element is used below for description.

The communication method includes: The certificate application network element receives a service certificate request message from a first network element, where the service certificate request message is used to request the certificate application network element to apply for a service certificate on behalf of the first network element; the certificate application network element sends a third request message to a management network element, where the third request message is used to request the management network element to verify whether the certificate application network element can apply for a service certificate on behalf of the first network element; and the certificate application network element receives second indication information from the management network element, where the second indication information indicates whether the certificate application network element can apply for a service certificate on behalf of the first network element, the second indication information includes a signature of the management network element and an event identity, the signature of the management network element is a signature based on the event identity, and the event identity identifies that the certificate application network element requests to apply for a service certificate on behalf of the first network element.

With reference to the seventh aspect, in some implementations of the seventh aspect, the method further includes: The certificate application network element sends a service certificate application message to a certificate enrolment network element, where the service certificate application message is used to request the certificate enrolment network element to issue the service certificate to the first network element, and the service certificate application message includes an identity of the certificate application network element and the signature of the management network element.

For technical effects of the method shown in the seventh aspect and the possible designs of the seventh aspect, refer to the technical effects in the fifth aspect and the possible designs of the fifth aspect.

According to an eighth aspect, a communication method is provided. The method may be performed by a management network element, or may be performed by a chip or a circuit configured in the management network element. This is not limited in this application. For convenience, an example in which the method is performed by the management network element is used below for description.

The communication method includes: The management network element receives a third request message from a certificate application network element, where the third request message is used to request the management network element to verify whether the certificate application network element can apply for a service certificate on behalf of a first network element; the management network element verifies, based on second information locally recorded by the management network element, whether the certificate application network element can apply for a service certificate on behalf of the first network element, where the second information is information related to the certificate application network element; and the management network element sends second indication information to a certificate enrolment network element, where the second indication information indicates whether the certificate application network element can apply for a service certificate on behalf of the first network element, the second indication information includes a signature of the management network element and an event identity, the signature of the management network element is a signature based on the event identity, and the event identity identifies that the certificate application network element requests to apply for a service certificate on behalf of the first network element.

With reference to the eighth aspect, in some implementations of the eighth aspect, when the third request message includes an identity of the first network element, the management network element verifying whether the certificate application network element can apply for a service certificate on behalf of the first network element includes: when an identity that is of one or more network elements managed by the certificate application network element and that is locally recorded by the management network element includes the identity of the first network element, the management network element determines that the certificate application network element can apply for a service certificate on behalf of the first network element; or when the second request message includes an initialization certificate corresponding to the first network element, the management network element verifying whether the certificate application network element can apply for a service certificate on behalf of the first network element includes: when an initialization certificate that corresponds to one or more network elements managed by the certificate application network element and that is locally recorded by the management network element includes the initialization certificate corresponding to the first network element, the management network element determines that the certificate application network element can apply for a service certificate on behalf of the first network element.

With reference to the eighth aspect, in some implementations of the eighth aspect, the method further includes: The management network element receives a query message from the certificate enrolment network element, where the query message is used to query whether the certificate application network element can apply for a service certificate on behalf of the first network element, and the query message includes an identity of the certificate application network element and the event identity; and the management network element sends a query response message to the certificate enrolment network element, where the query response message indicates whether the certificate application network element can apply for a service certificate on behalf of the first network element.

For technical effects of the method shown in the eighth aspect and the possible designs of the eighth aspect, refer to the technical effects in the fifth aspect and the possible designs of the fifth aspect.

According to a ninth aspect, a communication method is provided. The method may be performed by a certificate enrolment network element, or may be performed by a chip or a circuit configured in the certificate enrolment network element. This is not limited in this application. For convenience, an example in which the method is performed by the certificate enrolment network element is used below for description.

The communication method includes: The certificate enrolment network element receives a first message from a management network element, where the first message includes information that is related to at least one certificate application network element and that is locally recorded by the management network element; the certificate enrolment network element receives a service certificate application message from the certificate application network element, where the service certificate application message is used to request the certificate enrolment network element to issue a service certificate; and the certificate enrolment network element determines, based on the first message, whether to issue a service certificate.

Based on the solution, the certificate enrolment network element receives the information related to the at least one certificate application network element from the management network element, so that after receiving a service certificate application message from a certificate enrolment network element, the certificate enrolment network element may determine, based on locally stored initialization information of the certificate enrolment network element and information provided by the certificate enrolment network element by using the service certificate application message, whether to accept a request of the certificate enrolment network element for issuing a certificate, to implement security protection over certificate enrolment.

In addition, when issuing the certificate, the certificate enrolment network element may implement verification on the certificate application network element by locally referring to information sent by the management network element, so that no additional signaling is needed, thereby reducing signaling overheads.

With reference to the ninth aspect, in some implementations of the ninth aspect, the first message includes a correspondence between an identity of the certificate application network element and at least one of the following information: a network element identity, a domain identity, an initialization certificate identity, or a network element type.

According to a tenth aspect, a communication apparatus is provided, to implement the method according to the second aspect. The apparatus includes: a transceiver module, configured to receive a first request message from a certificate application network element, where the first request message is used to request to authenticate the certificate application network element, the first request message includes an identity of the certificate application network element and first information, and the first information is used to authenticate the certificate application network element, where the transceiver module is further configured to send a second request message to a management network element, where the second request message is used to request to verify the first information, and the second request message includes the first information; and the transceiver module is further configured to receive first indication information from the management network element, where the first indication information indicates whether the first information is successfully verified; and a processing module, configured to determine, based on the first indication information, whether the certificate application network element is a trusted network element.

With reference to the tenth aspect, in some implementations of the tenth aspect, the first information includes at least one of the following information: a network element identity list, a domain identity, or an initialization certificate list, where the network element identity list indicates at least one network element managed by the certificate application network element, the domain identity indicates a domain in which the certificate application network element is located, and the initialization certificate list indicates at least one initialization certificate configured for the at least one network element managed by the certificate application network element.

With reference to the tenth aspect, in some implementations of the tenth aspect, that the processing module determines, based on the first indication information, whether the certificate application network element is a trusted network element includes: When the first indication information indicates that the first information is successfully verified, the processing module determines that the certificate application network element is a trusted network element; or when the first indication information indicates that the first information fails to be verified, the processing module determines that the certificate application network element is an untrusted network element.

With reference to the tenth aspect, in some implementations of the tenth aspect, the first indication information further includes a signature of the management network element, and the signature of the management network element is used to verify whether the first indication information is trustworthy.

With reference to the tenth aspect, in some implementations of the tenth aspect, the transceiver module is further configured to send a first response message to the certificate application network element, where the first response message indicates whether the certificate application network element is a trusted network element of the certificate enrolment network element.

For technical effects of the method shown in the tenth aspect and the possible designs of the tenth aspect, refer to the technical effects in the second aspect and the possible designs of the second aspect.

According to an eleventh aspect, a communication apparatus is provided, to implement the method according to the third aspect. The apparatus includes:
a transceiver module, configured to send a first request message to a certificate enrolment network element, where the first request message is used to request to authenticate the communication apparatus, the first request message includes an identity of the communication apparatus and first information, and the first information is used to authenticate the communication apparatus, where the transceiver module is further configured to receive a first response message from the certificate enrolment network element, where the first response message indicates whether the communication apparatus is a trusted network element, the certificate enrolment network element determines, based on first indication information, whether the communication apparatus is a trusted network element, and the first indication information is feedback information in which the certificate enrolment network element requests a management network element to verify the first information.

With reference to the eleventh aspect, in some implementations of the eleventh aspect, the first information includes at least one of the following information: a network element identity list, a domain identity, or an initialization certificate list, where the network element identity list indicates at least one network element managed by the communication apparatus, the domain identity indicates a domain in which the communication apparatus is located, and the initialization certificate list indicates at least one initialization certificate configured for the at least one network element managed by the communication apparatus.

With reference to the eleventh aspect, in some implementations of the eleventh aspect, the transceiver module is further configured to receive a service certificate request message from a first network element, where the service certificate request message is used to request the communication apparatus to apply for a service certificate on behalf of the first network element; and a processing module is configured to determine, according to a rule, whether to respond to a request of the first network element for applying for a service certificate.

With reference to the eleventh aspect, in some implementations of the eleventh aspect, the service certificate request message includes an identity of the first network element and at least one of the following information: a public key corresponding to the first network element, a private key corresponding to the first network element, an initialization certificate configured for the first network element, or service type indication information.

With reference to the eleventh aspect, in some implementations of the eleventh aspect, the transceiver module is further configured to send a failure indication to the first network element, where the failure indication indicates that the request of the first network element for applying for a service certificate is invalid; or the transceiver module is further configured to send a service certificate application message to the certificate enrolment network element, where the service certificate application message is used to request the certificate enrolment network element to issue the service certificate.

With reference to the eleventh aspect, in some implementations of the eleventh aspect, the service certificate application message includes an identity of the communication apparatus and at least one of the following information: the public key corresponding to the first network element, the private key corresponding to the first network element, the initialization certificate configured for the first network element, the identity of the first network element, or a signature of the communication apparatus.

For technical effects of the method shown in the eleventh aspect and the possible designs of the eleventh aspect, refer to the technical effects in the third aspect and the possible designs of the third aspect.

According to a twelfth aspect, a communication apparatus is provided, to implement the method according to the fourth aspect. The apparatus includes: a transceiver module, configured to receive a second request message from a certificate enrolment network element, where the second request message is used to request to verify first information, and the second request message includes the first information; and a processing module, configured to verify the first information based on second information locally recorded by the communication apparatus, where the second information is information related to a certificate application network element, where the transceiver module is further configured to send first indication information to the certificate enrolment network element, where the first indication information indicates whether the first information is successfully verified.

With reference to the twelfth aspect, in some implementations of the twelfth aspect, the first information includes at least one of the following information: a network element identity list, a domain identity, or an initialization certificate list, where the network element identity list indicates at least one network element managed by the certificate application network element, the domain identity indicates a domain in which the certificate application network element is located, and the initialization certificate list indicates at least one initialization certificate configured for the at least one network element managed by the certificate application network element.

With reference to the twelfth aspect, in some implementations of the twelfth aspect, when the first information is the network element identity list, and an identity that is of one or more network elements managed by the certificate application network element and that is locally recorded by the communication apparatus constitutes the network element identity list, the processing module determines that the first information is successfully verified; or when the first information is the initialization certificate list, and an initialization certificate that corresponds to one or more network elements managed by the certificate application network element and that is locally recorded by the communication apparatus constitutes the initialization certificate list, the processing module determines that the first information is successfully verified; or when the first information is the domain identity, and an identity that is of the domain to which the certificate application network element belongs and that is locally recorded by the communication apparatus is the domain identity, the processing module determines that the first information is successfully verified.

With reference to the twelfth aspect, in some implementations of the twelfth aspect, the first indication information further includes a signature of the communication apparatus, and the signature of the communication apparatus is used to verify whether the first indication information is trustworthy.

For technical effects of the method shown in the twelfth aspect and the possible designs of the twelfth aspect, refer to the technical effects in the fourth aspect and the possible designs of the fourth aspect.

According to a thirteenth aspect, a communication apparatus is provided, to implement the method according to the sixth aspect. The apparatus includes: a transceiver module, configured to receive a service certificate application message from a certificate application network element, where the service certificate application message is used to request the communication apparatus to issue a service certificate, and the service certificate application message includes an identity of the certificate application network element and a signature of a management network element, where the transceiver module is further configured to issue the service certificate to a first network element, the signature of the management network element is a signature based on an event identity, and the event identity identifies that the certificate application network element requests to apply for a service certificate on behalf of the first network element.

With reference to the thirteenth aspect, in some implementations of the thirteenth aspect, the transceiver module is further configured to send a query message to the management network element, where the query message is used to query whether the certificate application network element can apply for a service certificate on behalf of the first network element, and the query message includes the identity of the certificate application network element and the event identity; and the transceiver module is further configured to receive a query response message sent by the management network element, where the query response message indicates whether the certificate application network element can apply for a service certificate on behalf of the first network element.

For technical effect of the method shown in the thirteenth aspect and the possible designs of the thirteenth aspect, refer to the technical effect in the sixth aspect and the possible designs of the sixth aspect.

According to a fourteenth aspect, a communication apparatus is provided, to implement the method according to the seventh aspect. The apparatus includes: a transceiver module, configured to receive a service certificate request message from a first network element, where the service certificate request message is used to request the communication apparatus to apply for a service certificate on behalf of the first network element, where the transceiver module is further configured to send a third request message to a management network element, where the third request message is used to request the management network element to verify whether the communication apparatus can apply for a service certificate on behalf of the first network element; and the transceiver module is further configured to receive second indication information from the management network element, where the second indication information indicates whether the communication apparatus can apply for a service certificate on behalf of the first network element, the second indication information includes a signature of the management network element and an event identity, the signature of the management network element is a signature based on the event identity, and the event identity identifies that the communication apparatus requests to apply for a service certificate on behalf of the first network element.

With reference to the fourteenth aspect, in some implementations of the fourteenth aspect, the transceiver module is further configured to send a service certificate application message to a certificate enrolment network element, where the service certificate application message is used to request the certificate enrolment network element to issue the service certificate to the first network element, and the service certificate application message includes an identity of the communication apparatus and the signature of the management network element.

For technical effects of the method shown in the fourteenth aspect and the possible designs of the fourteenth aspect, refer to the technical effects in the seventh aspect and the possible designs of the seventh aspect.

According to a fifteenth aspect, a communication apparatus is provided, to implement the method according to the eighth aspect. The apparatus includes: a transceiver module, configured to receive a third request message from a certificate application network element, where the third request message is used to request the communication apparatus to verify whether the certificate application network element can apply for a service certificate on behalf of a first network element; and a processing module, configured to verify, based on second information locally recorded by the communication apparatus, whether the certificate application network element can apply for a service certificate on behalf of the first network element, where the second information is information related to the certificate application network element, where the transceiver module is further configured to send second indication information to a certificate enrolment network element, where the second indication information indicates whether the certificate application network element can apply for a service certificate on behalf of the first network element, the second indication information includes a signature of the communication apparatus and an event identity, the signature of the communication apparatus is a signature based on the event identity, and the event identity identifies that the certificate application network element requests to apply for a service certificate on behalf of the first network element.

With reference to the fifteenth aspect, in some implementations of the fifteenth aspect, when the third request message includes an identity of the first network element, the processing module verifying whether the certificate application network element can apply for a service certificate on behalf of the first network element includes: when an identity that is of one or more network elements managed by the certificate application network element and that is locally recorded by the communication apparatus includes the identity of the first network element, the processing module determines that the certificate application network element can apply for a service certificate on behalf of the first network element; or when the second request message includes an initialization certificate corresponding to the first network element, the processing module verifying whether the certificate application network element can apply for a service certificate on behalf of the first network element includes: when an initialization certificate that corresponds to one or more network elements managed by the certificate application network element and that is locally recorded by the communication apparatus includes the initialization certificate corresponding to the first network element, the processing module determines that the certificate application network element can apply for a service certificate on behalf of the first network element.

With reference to the fifteenth aspect, in some implementations of the fifteenth aspect, the transceiver module is further configured to receive a query message from the certificate enrolment network element, where the query message is used to query whether the certificate application network element can apply for a service certificate on behalf of the first network element, and the query message includes an identity of the certificate application network element and the event identity; and the transceiver module is further configured to send a query response message to the certificate enrolment network element, where the query response message indicates whether the certificate application network element can apply for issuing the service certificate on behalf of the first network element.

For technical effects of the method shown in the fifteenth aspect and the possible designs of the fifteenth aspect, refer to the technical effects in the eighth aspect and the possible designs of the eighth aspect.

According to a sixteenth aspect, a communication apparatus is provided, to implement the method according to the ninth aspect. The apparatus includes: a transceiver module, configured to receive a first message from a management network element, where the first message includes information that is related to at least one certificate application network element and that is locally recorded by the management network element, where the transceiver module is further configured to receive a service certificate application message from the certificate application network element, where the service certificate application message is used to request the communication apparatus to issue a service certificate; and a processing module, configured to determine, based on the first message, whether to issue a service certificate.

With reference to the sixteenth aspect, in some implementations of the sixteenth aspect, the first message includes a correspondence between an identity of the certificate application network element and at least one of the following information: a network element identity, a domain identity, an initialization certificate identity, or a network element type.

For technical effects of the method shown in the sixteenth aspect and the possible designs of the sixteenth aspect, refer to the technical effects in the ninth aspect and the possible designs of the ninth aspect.

According to a seventeenth aspect, a communication system is provided, including a certificate application network element, a certificate enrolment network element, and a management network element, where the certificate enrolment network element is configured to perform the method according to the second aspect, the certificate application network element performs the method according to the third aspect, and the management network element is configured to perform the method according to the tenth aspect.

According to an eighteenth aspect, a communication system is provided, including a certificate application network element, a certificate enrolment network element, and a management network element, where the certificate enrolment network element is configured to perform the method according to the sixth aspect, the certificate application network element performs the method according to the seventh aspect, and the management network element is configured to perform the method according to the eighth aspect.

According to a nineteenth aspect, a communication apparatus is provided. The apparatus includes: a memory, configured to store a program; and a processor, configured to execute the program stored in the memory. When the program stored in the memory is executed, the processor is configured to perform the methods provided in the foregoing aspects.

According to a twentieth aspect, this application provides a processor, configured to perform the methods provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the information, the processor outputs the information to a transceiver, so that the transceiver transmits the information. After the foregoing information is output by the processor, other processing may further need to be performed on the foregoing information before the foregoing information arrives at the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information before the foregoing information is input into the processor.

According to the foregoing principle, for example, receiving the request message in the foregoing methods may be understood as receiving the input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in this embodiment of this application.

According to a twenty-first aspect, a computer-readable storage medium is provided. The computer-readable storage medium stores program code executed by a device, and the program code is used to perform the methods provided in the foregoing aspects.

According to a twenty-second aspect, a computer program product including instructions is provided. When the computer program product runs on a computer, the computer is enabled to perform the methods provided in the foregoing aspects.

According to a twenty-third aspect, a chip is provided. The chip includes a processor and a communication interface, and the processor reads, through the communication interface, instructions stored in a memory, to perform the methods provided in the foregoing aspects.

Optionally, in an implementation, the chip may further include the memory. The memory stores the instructions. The processor is configured to execute the instructions stored in the memory. When the instructions are executed, the processor is configured to perform the methods provided in the foregoing aspects.

### BRIEF DESCRIPTION OF DRAWINGS

FIG. 1 is a diagram of a network architecture 100 according to this application;
FIG. 2 is a diagram of a CEMAF;
FIG. 3 is a schematic flowchart of a communication method according to this application;
FIG. 4 is a schematic flowchart of another communication method according to this application;
FIG. 5 is a schematic flowchart of still another communication method according to this application;
FIG. 6 is a block diagram of a communication apparatus 10 according to an embodiment of this application;
FIG. 7 is a diagram of another communication apparatus 20 according to an embodiment of this application; and
FIG. 8 is a diagram of a chip system 30 according to an embodiment of this application.

### DESCRIPTION OF EMBODIMENTS

The following describes technical solutions of this application with reference to the accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In a communication system, a part operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network that meets a 3GPP standard requirement, which is referred to as a 3GPP network for short. The 3GPP network usually includes but is not limited to a 5G network, a 4th-generation (4th-generation, 4G) mobile communication network, and another future communication system such as a 6th-generation (6th-generation, 6G) network.

For ease of description, the PLMN or the 5G network is used as an example for description in embodiments of this application.

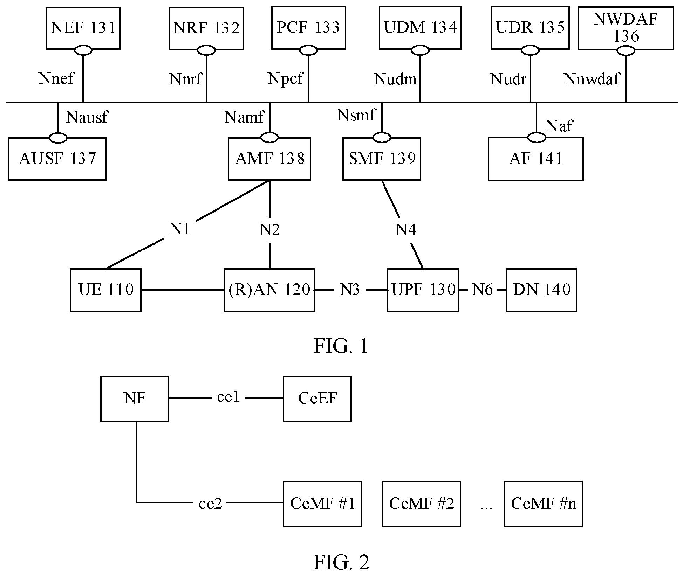

FIG. 1 is a diagram of a network architecture 100 according to this application. A 5G network architecture based on a service-based architecture SBA in a non-roaming scenario defined in a 3GPP standardization process is used as an example. As shown in the figure, the network architecture may include three parts: a terminal device part, a DN, and an operator network PLMN part. The following briefly describes a function of a network element of each part.

The terminal device part may include a terminal device 110, and the terminal device 110 may also be referred to as user equipment (user equipment, UE). The terminal device 110 in this application is a device having wireless transceiver functions, and may communicate with one or more core network (core network, CN) devices through an access network device (which may also be referred to as an access device) in a radio access network (radio access network, RAN) 140. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be deployed on land, including an indoor, outdoor, handheld, or vehicle-mounted device; may be deployed on the water (for example, a ship); or may be deployed in the air (for example, on an aircraft, a balloon, or a satellite). The terminal device 110 may be a cellular phone (cellular phone), a cordless telephone set, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the terminal device 110 may be a handheld device having a wireless communication function, a computing device, another device connected to a wireless modem, a vehicle-mounted device, a wearable device, an uncrewed aerial vehicle device, a terminal in internet of things or internet of vehicles, a terminal in any form in a 5G network or a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), or the like. The terminal device herein is a 3GPP terminal. A type, a category, or the like of the terminal device is not limited in embodiments of this application. For ease of description, in this application, an example in which UE represents a terminal device is used for description below.

The operator network PLMN part may include but is not limited to a (radio) access network ((radio) access network, (R)AN) 120 and a core network (core network, CN) part.

The (R)AN 120 may be considered as a sub-network of an operator network, and is an implementation system between a service node in the operator network and the terminal device 110. To access the operator network, the terminal device 110 first passes through the (R)AN 120, and then may be connected to the service node in the operator network through the (R)AN 120. An access network device (RAN device) in embodiments of this application is a device that provides a wireless communication function for the terminal device 110, and may also be referred to as a network device. The RAN device includes but is not limited to a next generation NodeB (next generation NodeB, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission and reception point (transmitting and receiving point, TRP), a transmission point (transmitting point, TP), a small cell base station device (pico), a mobile switching center, a network device in a future network, or the like. In systems using different radio access technologies, a name of a device having an access network device function may vary. For ease of description, in all embodiments of this application, the foregoing apparatuses that provide a wireless communication function for the terminal device 110 are collectively referred to as an access network device, or referred to as a RAN or an AN for short. It should be understood that a specific type of the access network device is not limited in this specification.

The CN part may include but is not limited to the following NFs: a user plane function (user plane function, UPF) 130, a network exposure function (network exposure function, NEF) 131, a network function repository function (network function repository function, NRF) 132, a policy control function (policy control function, PCF) 133, a unified data management (unified data management, UDM) function 134, a unified data repository (unified data repository, UDR) function 135, a network data analytics function (network data analytics function, NWDAF) 136, an authentication server function (authentication server function, AUSF) 137, an access and mobility management function (access and mobility management function, AMF) 138, and a session management function (session management function, SMF) 139.

The data network DN 140 may also be referred to as a packet data network (packet data network, PDN), and is usually a network located outside the operator network, for example, a third-party network. Certainly, in some implementations, the DN may alternatively be deployed by an operator, that is, the DN belongs to a part of the PLMN. Whether the DN belongs to the PLMN is not limited in this application. The operator network PLMN may access a plurality of data networks DNs 140. The data network DN 140 may be deployed with a plurality of services, and may provide a data service, a voice service, and/or the like for the terminal device 110. For example, the data network DN 140 may be a private network of a smart factory, a sensor installed in a workshop of the smart factory may be the terminal device 110, a control server of the sensor is deployed in the data network DN 140, and the control server may provide a service for the sensor. The sensor may communicate with the control server, to obtain instructions of the control server, transmit collected sensor data to the control server according to the instructions, and the like. For another example, the data network DN 140 may be an internal office network of a company, a mobile phone or a computer of an employee of the company may be the terminal device 110, and the mobile phone or the computer of the employee may access information, data resources, and the like in the internal office network of the company. The terminal device 110 may establish a connection to the operator network through an interface (for example, N1) provided by the operator network, and use the data service, the voice service, and/or the like provided by the operator network. The terminal device 110 may further access the data network DN 140 through the operator network, and use an operator service deployed in the data network DN 140 and/or a service provided by a third party.

The following further briefly describes NF functions included in the CN.
1. The UPF 130 is a gateway provided by an operator, and is a gateway for communication between the operator network and the data network DN 140. The UPF network function 130 includes user plane-related functions such as data packet routing and transmission, data packet detection, traffic usage reporting, quality of service (quality of service, QoS) handling, uplink data packet detection, and downlink data packet storage.
2. The NEF 131 is a control plane function provided by an operator, and is mainly used to enable a third party to use a service provided by a network, support the network in opening a capability, an event, and data analysis of the network, convert security configuration information from an external application to a PLMN and exchange information inside and outside the PLMN, provide an API interface opened by the operator network, and provide interaction between an external server and an internal operator network, and the like.
3. The NRF 132 is a control plane function provided by an operator, and may be configured to maintain real-time information of a network function and a service in a network. For example, the NRF 132 supports network service discovery, maintains services supported by NF configuration data (an NF profile) of NF instances, supports service discovery of a service communication proxy (service communication proxy, SCP), maintains SCP configuration data (an SCP profile) of SCP instances, sends notifications about newly registered, deregistered, and updated NFs and SCPs, maintains health statuses of NFs and SCPs, and the like.
4. The PCF 133 is a control plane function provided by an operator, and supports a unified policy framework to govern network behavior and provide subscription information related to a policy rule and policy decision for another control function.
5. The UDM 134 is a control plane function provided by an operator, and is responsible for storage of a subscription permanent identifier (subscription permanent identifier, SUPI) of a subscriber of the operator network, a generic public subscription identifier (generic public subscription identifier, GPSI) of the subscriber, a credential (credential), and other information. The SUPI is first encrypted in a transmission process, and an encrypted SUPI is referred to as a subscription concealed identifier (subscription concealed identifier, SUCI). The information stored in the UDM network function 134 may be used for authentication and authorization for accessing the operator network by the terminal device 110. The subscriber of the operator network may be specifically a user using a service provided by the operator network, for example, a user using a subscriber identity module (subscriber identity module, SIM) card of China Telecom or a user using a SIM card of China Mobile. The credential of the subscriber may be a long-term key stored in the SIM card, or a stored small file, for example, information related to encryption of the SIM card, and is used for authentication and/or authorization. It should be noted that for ease of description, information such as the permanent identifier, the credential, a security context, authentication data (cookie), and a token related to verification/authentication and authorization is not limited or distinguished in embodiments of this application.
6. The UDR 135 is a control plane function provided by an operator, and provides a function of storing and obtaining subscription data for a UDM, provides a function of storing and obtaining policy data for a PCF, stores and obtains NF group ID (group ID) information of a user, and the like.
7. The NWDAF 136 is a control plane function provided by an operator. A main function of the NWDAF 136 is to collect data from an NF, an external application function AF, an operations, administration and maintenance (operations, administration and maintenance, OAM) system, and the like, and provide the NF and the AF with NWDAF service registration, data exposure, data analysis, and the like.
8. The AUSF 137 is a control plane function provided by an operator, and is usually used for primary authentication, namely, authentication between the terminal device 110 (the subscriber) and the operator network. After receiving an authentication request initiated by the subscriber, the AUSF network function 137 may perform authentication and/or authorization on the subscriber by using authentication information and/or authorization information stored in the UDM network function 134, or generate authentication information and/or authorization information of the subscriber by using the UDM network function 134. The AUSF network function 137 may feed back the authentication information and/or the authorization information to the subscriber.
9. The AMF 138 is a control plane network function provided by an operator network, and is responsible for access control and mobility management when the terminal device 110 accesses the operator network, for example, including functions such as mobility status management, allocation of a temporary user identity, and user authentication and authorization.

The AMF 138 is configured to perform a NAS connection to UE, and has a same 5G NAS security context as the UE. The 5G NAS security context includes KAMF, a NAS hierarchy key, key identification information same as the 5G NAS security context, a UE security capability, and uplink and downlink NAS COUNT values. The NAS hierarchy key includes a NAS encryption key and a NAS integrity protection key that are respectively used for confidentiality protection of a NAS message and integrity protection of the NAS message.
10. The SMF 139 is a control plane network function provided by an operator network, and is responsible for managing a PDU session of the terminal device 110. The PDU session is a channel for transmitting a PDU, and the terminal device and the data network DN 140 need to transmit PDUs to each other through the PDU session. The SMF network function 139 is responsible for establishment, maintenance, deletion, and the like of the PDU session. The SMF network function 139 includes session-related functions such as session management (for example, session establishment, modification, and release, including tunnel maintenance between the user plane function UPF 130 and the (R)AN 120), selection and control of the UPF network function 130, service and session continuity (service and session continuity, SSC) mode selection, and roaming.
11. The AF 141 is a control plane network function provided by an operator network, and is configured to provide application layer information. The AF 141 may interact with a policy framework through a network exposure function network element, or directly interact with the policy framework to make a policy decision request. The AF 141 may be located inside or outside the operator network.

It may be understood that the foregoing network elements or functions may be physical entities in a hardware device, software instances running on dedicated hardware, or virtualized functions instantiated on a sharing platform (for example, a cloud platform). In short, an NF may be implemented by hardware or software.

In FIG. 1, Nnef, Nnrf, Npcf, Nudm, Nudr, Nnwdaf, Nausf, Namf, Nsmf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that interface names between the network functions in the figure are merely examples. During specific implementation, the interface names of the system architecture may alternatively be other names. This is not limited in this application. In addition, names of messages (or signaling) transmitted between the foregoing network elements are also merely an example, and do not constitute any limitation on functions of the messages.

For ease of description, in embodiments of this application, network functions (such as the NEF 131, ..., and the SMF 139) are collectively/briefly referred to as an NF. In other words, the NF described below in embodiments of this application may be replaced with any network function. In addition, FIG. 1 describes only some network functions as an example, and the NF described below is not limited to the network functions shown in FIG. 1.

It should be understood that the foregoing network architecture applied to embodiments of this application is merely a network architecture described from a perspective of a service-based architecture, and a network architecture applicable to embodiments of this application is not limited thereto. Any network architecture that can implement functions of the foregoing network elements is applicable to embodiments of this application.

It should be further understood that the AMF, the SMF, the UPF, the NEF, the AUSF, the NRF, the PCF, and the UDM shown in the figure may be understood as network elements configured to implement different functions in a core network, for example, may be combined as required to form a network slice. These network elements of the core network may be independent devices, or may be integrated into a same device to implement different functions. A specific form of the foregoing network elements is not limited in this application.

It should be further understood that the foregoing names are defined merely for distinguishing between different functions, and should not constitute any limitation on this application. This application does not exclude a possibility that another name is used in the 5G network and another future network. For example, in the 6G network, some or all of the foregoing network elements may still use the terms in 5G, or may use other names.

For ease of understanding embodiments of this application, some basic concepts in this application are briefly described. It should be understood that the basic concepts described below are described by using basic concepts specified in an NR protocol as an example, but embodiments of this application are not limited to being applied only to an NR system. Therefore, standard names appearing when the NR system is used as an example for description are all functional descriptions, and specific names are not limited, indicate only functions of a device, and may be correspondingly extended to another future system.
1. Certification authority (Certification Authority, CA): The certification authority is responsible for managing an entire life cycle of a public key, including issuing a certificate, defining a certificate validity period, and revoking the certificate. It should be noted that the CA may further include a registration authority (registration authority, RA), and the RA is configured to submit a certificate enrolment request to the CA after obtaining and authenticating a user identity. The RA may be a function integrated into the CA, or may be independently deployed. In this application, it is assumed that the CA integrates a function of the RA. A certificate enrolment network element (Certificate enrolment Function, CeEF) in the following may be a part of an interaction function module in the CA or the RA.
2. Public key infrastructure certificate management protocol (Certificate management protocol, CMP): The public key infrastructure certificate management protocol is an internet protocol used to obtain digital certificates that comply with the X.509 standard in a public key infrastructure (Public Key Infrastructure, PKI) system. Specifically, the CMP is used to provide online interaction between PKI components, including interaction between the CA and a client system, and define protocol messages for creating and managing certificates. The term "certificate" in the CMP refers to an X.509 v3 certificate defined in X.509. This is described in detail in an existing technical document (for example, IETF RFC 4210), and is not described in detail in this application.
3. X.509 certificate: The X.509 standard specifies information that may be included in the certificate, and describes a method (a data format) for recording the information. A related certificate profile is defined in an existing technical document (for example, RFC 5280). The X.509 certificate includes information listed in the following Table 1:

**Table 1 X.509 certificate format**

| Information name | Information function |
|---|---|
| Version | The version identifies a version of the X.509 standard used for the certificate, which may affect information that can be specified in the certificate. To date, three versions have been defined. |
| Serial number | An entity that issues a certificate is responsible for specifying a serial number for the certificate, to distinguish the certificate from other certificates issued by the entity. This information is used for many purposes. For example, if a certificate is revoked, a serial number of the certificate is placed in a certificate revocation list (Certificate Revocation List, CRL). |
| Signature algorithm identifier | The signature algorithm identifier identifies an algorithm used when a CA signs a certificate. |
| Issuer name | The issuer name is an X.500 name of an entity that issues a certificate, and is usually a CA. Using the certificate means trusting the entity that issues the certificate (note: in some cases (for example, for a root CA certificate or a top-layer CA certificate), the issuer signs a certificate of the issuer). |
| Subject name | For a certificate, the subject name identifies an entity associated with a public key stored in the certificate. |
| Subject public key information | The subject public key information is a public key of the certificate subject and includes an algorithm identifier specifying a public key cryptosystem to which the key belongs and all related key parameters. |
| Certificate validity period | The certificate validity period is a time period in which the certificate is valid. The certificate becomes invalid after the time period. |
| Certificate signature | The certificate signature is digital signature information generated when the CA that issues the certificate signs the certificate using a CA private key. |

4. Certificate enrolment and management framework (Certificate Enrolment and Management Framework, CEMAF):

Specifically, a certificate management framework defined in a certificate management-related subject in the 3rd generation partnership project (3rd Generation Partnership Project, 3GPP) is shown in FIG. 2. FIG. 2 is a diagram of a CEMAF.

It can be learned from FIG. 2 that the CEMAF includes a certificate management network element (Certificate management Function, CeMF) and a CeEF. The CeEF is a network element of an operator and is configured to issue a certificate. In this application, for a function of the CeEF, refer to the function of the foregoing CA. The CeMF is a network element in a trusted domain and is configured to manage and apply for a certificate. There may be a plurality of CeMFs (for example, a CeMF #1, a CeMF #2, ..., and a CeMF #n shown in FIG. 2) in the CEMAF. Different CeMFs may be located in different trusted domains, or may be located in a same trusted domain.

Specifically, a communication interface (a ce1 interface shown in FIG. 2) between an NF and the CeEF is configured to register a program related to certificate provisioning and update, and a communication interface (a ce2 interface shown in FIG. 2) between the NF and the CeMF is configured to check a certificate status.

In other words, corresponding functions in the CEMAF have been divided into two network elements (for example, the CeEF and the CeMF). A registration function network element (the CeEF) of the CEMAF is configured to issue a certificate. A management network element (the CeMF) of the CEMAF is configured to manage and apply for a certificate.

It should be understood that the CeEF and the CeMF are specifically deployed in a free form. For example, the CeEF and the CeMF may be network elements in a network, or may be functions in the CA. For another example, the CeEF may alternatively be a dedicated network element specially responsible for communicating with the CA (or the RA), and is deployed in an operator network (that is, the CeEF is not included in the CA). For another example, the CeEF and the CeMF may be deployed in a certificate network management entity. Examples are not enumerated herein.
5. Service certificate: The service certificate is a certificate needed by an NF for user plane or signaling plane user transmission, and may also be referred to as a formal certificate, an actual certificate, or the like. For example, the service certificate is a transport layer security (Transport Layer Security, TLS) certificate needed for establishing a secure connection between NFs or a certificate needed for establishing an internet protocol security (Internet Protocol Security, IPSEC) channel. This is not limited in this application.
6. Initial trust: To implement automated certificate management of an NF in a service-based architecture (Service-Based Architecture, SBA), the initial trust needs to be established between the NF and the operator CA, which is a prerequisite for executing a service certificate registration procedure.

In addition, to facilitate understanding of embodiments of this application, the following several descriptions are provided.

First, in this application, "indicating" may include directly indicating and indirectly indicating. When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by sending configuration information to a receiver device by a transmitter device.

Second, "at least one" shown in this application means one or more, and "a plurality of" means two or more. In addition, in embodiments of this application, "first", "second", and various numerical numbers (for example, "#1" and "#2") are merely used for differentiation for ease of description, and are not used to limit the scope of embodiments of this application. Sequence numbers of the following processes do not mean execution sequences. The execution sequences of the processes should be determined based on functions and internal logic of the processes, and should not be construed as any limitation on the implementation processes of embodiments of this application. It should be understood that objects described in such a manner are interchangeable in proper cases, to describe solutions other than embodiments of this application. In addition, in embodiments of this application, words such as "510" and "520" are merely identifiers for ease of description, and do not limit a sequence of performing steps.

Third, in this application, the word "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Fourth, "save" in embodiments of this application may mean that saved in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the translator, the processor, or the communication apparatus. A type of the memory may be a storage medium in any form. This is not limited in this application.

Fifth, the "protocol" in embodiments of this application may refer to standard protocols in the communication field, for example, may include an LTE protocol, an NR protocol, and a related protocol applied to a future communication system. This is not limited in this application.

Sixth, in embodiments of this application, "in a case of", "when", and "if" may be used interchangeably sometimes. It should be noted that, when a difference between the three is not emphasized, meanings to be expressed are consistent.

Seventh, in embodiments of this application, terms and English acronyms and abbreviations, such as radio resource control (RRC), are all examples provided for ease of description, and should not constitute any limitation on this application. This application does not exclude a possibility of defining another term that can implement a same or similar function in an existing or a future protocol.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

With reference to FIG. 1, the foregoing briefly describes the scenario to which the communication method provided in embodiments of this application can be applied, describes the basic concept that may be used in embodiments of this application, and describes the concept of the initial trust in the basic concept. A solution for establishing the initial trust between the NF and the operator CA is as follows: An initial certificate is issued to the NF through a private (Private) CA, to implement security protection in a process in which the NF registers a service certificate with the operator CA. In this solution, the initial certificate issued through the private CA in a same security domain (security domain) (or referred to as a trusted domain (trusted domain)) as the NF is used. The private CA acts as an initial trust anchor for the NF during initial registration. A root certificate of the private CA should be configured as a trusted anchor of the CA in the operator PKI Specifically, in this solution, a prerequisite for establishing the initial trust between the NF and the operator CA is that the private CA is created and deployed in a same network security (trusted) domain as the NF in the 5GC SBA, and the root certificate of the private CA needs to be preconfigured in the CA in the operator PKI.

In the solution of the initial certificate of the NF needed for establishing the initial trust between the NF and the operator CA, the initial trust needs to be established through the private CA. Therefore, the method cannot be used in the scenario without the private CA. In addition, in the solution for establishing the initial trust through the private CA, the root certificate of the private CA needs to be preconfigured in the CA of the operator PKI system, and a preconfiguration process is needed.

This application provides a communication method, which may be applied to the certificate management framework including the CeEF and the CeMF shown in FIG. 2. The CeMF applies for a certificate for the NF, and when verification on authorization of the CeMF succeeds, the CeEF returns a valid NF certificate to the NF through the CeMF. The initial trusted may be established without the private CA.

It should be understood that the communication method provided in embodiments of this application may be applied to a 5G system, for example, the communication system shown in FIG. 1.

It should be further understood that a specific structure of an execution body of the method provided in embodiments of this application is not specifically limited in the following embodiments, provided that communication can be performed according to the method provided in embodiments of this application by running a program that records code of the method provided in embodiments of this application. For example, the method provided in embodiments of this application may be performed by a network element, or a functional module that is in the network element and that can invoke and execute a program.

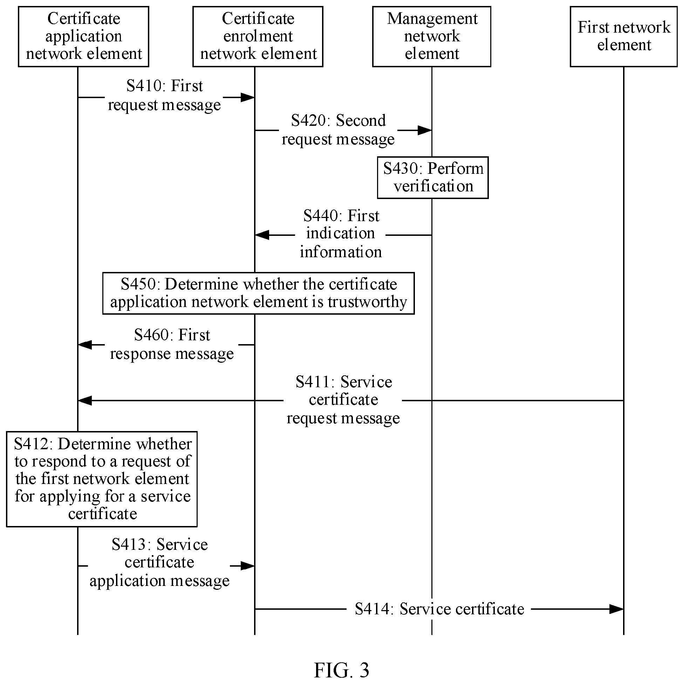

FIG. 3 is a schematic flowchart of a communication method according to this application. The method includes the following step.

S410: A certificate application network element sends a first request message to a certificate enrolment network element, or the certificate enrolment network element receives the first request message from the certificate application network element.

The first request message is used to request to authenticate whether the certificate application network element is a trusted network element. Optionally, that the certificate application network element sends the first request message to the certificate enrolment network element may be understood as: The certificate application network element requests to establish initial trust. In other words, the certificate application network element requests, by using the first request message, the certificate enrolment network element to verify the certificate application network element. If the certificate enrolment network element verifies that the certificate application network element is a trusted network element, it indicates that the certificate enrolment network element trusts the certificate application network element and may accept a certificate application sent by the certificate application network element. In this embodiment, the first request message may also be referred to as an initial trust establishment request message.

For example, the certificate application network element may be the foregoing CeMF shown in FIG. 2, and the certificate enrolment network element may be the foregoing CeEF shown in FIG. 2. It should be understood that a name of the certificate application network element is not limited in this embodiment, and a network element that can be configured to apply for a service certificate for a function network element (for example, an NF) may be considered as the certificate application network element in this embodiment. Similarly, a name of the certificate enrolment network element is not limited in this embodiment, and a network element that can be configured to issue a service certificate for a function network element (for example, an NF) may be considered as the certificate enrolment network element in this embodiment. For ease of description, an example in which the certificate application network element is the CeMF and the certificate enrolment network element is the CeEF is used below for description.

Specifically, the first request message includes an identity (identify, ID) of the CeMF.

In a possible implementation, the CeMF ID may be an IP address of the CeMF.

In another possible implementation, the CeMF ID may be an instance (instance) ID of the CeMF.

It should be understood that the IP address of the CeMF, the instance ID of the CeMF, or the like is merely an example for describing a possible form of the CeMF ID, and does not constitute any limitation on the protection scope of this application. The CeMF ID may alternatively be other information that can identify the CeMF, for example, may be type information of the CeMF, or may be location information of the CeMF. Examples are not enumerated herein.

Specifically, the first request message may further include first information, where the first information is used to authenticate the CeMF, and the first information includes at least one of the following information: a network element identity list (NF ID list), a domain identity (Domain ID), or an initialization certificate list.

The NF ID list is a list of one or more NFs managed by the CeMF. An NF ID is identification information of an NF, and includes but is not limited to information identifying the NF, for example, an IP address of the NF or an instance ID of the NF. The CeMF and the one or more NFs indicated by the NF ID list are provided by a same vendor. The CeMF may provide a proxy service for the NF indicated by the NF ID list (for example, request a service certificate on behalf of the NF). For example, the CeMF, an NF #1, an NF #2, and an NF #3 are provided by the same vendor, and identities of the NF #1, the NF #2, and the NF #3 are respectively "#1", "#2", and "#3". The CeMF may provide proxy services for the NF #1, the NF #2, and the NF #3. In this case, NF ID list information is information indicating "#1", "#2", and "#3".

The domain ID indicates a domain in which the CeMF is located. For example, the CeMF is located in a trusted domain, and the domain ID is an identity of the trusted domain. The domain ID may be an ID of an area, and includes but is not limited to: a virtual local area network (Virtual Local Area Network, VLAN) ID. The domain ID may be an ID of a specific equipment vendor, and includes but is not limited to: a vendor (Vendor) ID. The domain ID may be an identity of an area of an operator, and includes but is not limited to: a public land mobile network (Public Land Mobile Network, PLMN) ID.

The initialization certificate list is an initialization certificate corresponding to the NF managed by the CeMF. The initialization certificate list may be preconfigured in the CeMF, or may be sent by the NF managed by the CeMF to the CeMF (for example, the NF sends a request message #1 to the CeMF, where the request message #1 is used to request to obtain a service certificate, and the request message #1 carries the initialization certificate of the NF). Initialization certificate list information may be identification information of an initialization certificate included in the initialization certificate list. For example, NFs managed by the CeMF include an NF #1, an NF #2, and an NF #3, and initialization certificates respectively corresponding to the NF #1, the NF #2, and the NF #3 are an initialization certificate #1, an initialization certificate #2, and an initialization certificate #3. In this case, the initialization certificate list information is information identifying the initialization certificate #1, the initialization certificate #2, and the initialization certificate #3.

Further, in this embodiment, after receiving the first request message sent by the CeMF, the CeEF may send a second request message to a management network element, where the second request message is used to request the management network element to verify the first information sent by the CeMF. It should be noted that, in this embodiment, after receiving the first request message sent by the CeMF, the CeEF may not send the second request message, but another network element sends the second request message to the management network element to request the management network element to verify the first information. For example, the CeEF sends the second request message through the another network element. For another example, another device learns the first information, and requests the management network element to verify the first information. In other words, this embodiment focuses on verifying the first information by the management network element. How to trigger the management network element to verify the first information is not limited, and the management network element may be triggered by the CeEF, or may be triggered by the another network element. For ease of description, an example in which the CeEF triggers the management network element to verify the first information is used below for description.

The method procedure shown in FIG. 3 further includes the following step.

S420: The CeEF sends the second request message to the management network element, or the management network element receives the second request message from the CeEF.

Specifically, in this embodiment, the management network element is a general name of a network management system. For example, the management network element may be an EMS, a network management system (Network Management System, NMS), a MANO, a part of an OSS/a BSS, or one or more thereof. For ease of description, the management network element is referred to as an MnF below. It should be noted that the management network element is not always referred to as the MnF below, and the management network element may also be referred to as an OAM.

In addition, it should be noted that the management network element in this application includes but is not limited to the following functions: network device (network element) initialization management, network configuration management, network performance management, network fault management, network optimization management, or network route management. For example, the management network element may record network element initialization information.

Optionally, that the CeEF sends the second request message to the management network element may be understood as: The CeEF requests the management network element to verify the information sent by the CeMF. In other words, the CeEF requests, by using the second request message, the management network element to verify the first information sent by the CeMF. In this embodiment, the second request message may also be referred to as a verification request message.

The second request message includes the CeMF ID and a CeEF ID. The CeMF ID identifies the CeMF. The CeMF ID has been described in the CeMF ID carried in the first request message in step S410. Details are not described herein again. The CeEF ID identifies the CeEF. The CeEF ID includes but is not limited to information identifying the CeEF, for example, an IP address of the CeEF or an instance ID of the CeEF.

Specifically, the second request message further includes the first information, for example, includes at least one of the following information: the NF ID list, the domain ID, and the initialization certificate list.

The NF ID list, the domain ID, the initialization certificate list, and the like have been described in the information part carried in the first request message in step S410. Details are not described herein again.

It should be understood that, when the first request message carries the first information, the second request message also carries the first information. The first information may be at least one of the NF ID list information, the domain ID information, and the initialization certificate list information. In other words, in this embodiment, the CeEF may transparently transmit, to the MnF, the first information sent by the CeMF, and the MnF verifies the first information sent by the CeMF.

After receiving the second request message from the CeEF, the MnF may perform verification. The method procedure shown in FIG. 3 further includes the following step.

S430: The MnF performs verification.

It should be noted that, in this embodiment, in an NF initialization process, the MnF records and allocates a relationship between the CeMF and an NF. Specifically, the MnF locally records an NF ID. Optionally, if an initialization certificate is preconfigured in the NF, the MnF locally records the initialization certificate of the NF.

In a possible implementation, the initialization certificate of the NF is preconfigured by the MnF and is recorded in the MnF. For example, when the NF is initialized, a MANO in a device domain configures the initialization certificate to an implementation layer (for example, a virtualized network function (Virtualized Network Function, VNF) instance) of the NF, and records the initialization certificate in the MnF.

In another possible implementation, the initialization certificate of the NF is issued by a vendor/an operator-specific private CA through a private interface.

It should be understood that the two implementations are merely examples for describing possible manners of configuring the initialization certificate of the NF, and do not constitute any limitation on the protection scope of this application. In this embodiment, whether to configure the initialization certificate of the NF is not limited, and a manner of configuring the initialization certificate of the NF is not limited either.

In this embodiment, the MnF may verify, in different verification manners, the information sent by the CeMF. For example, the verification manners include but are not limited to the following.

In a possible implementation, when the second request message carries the domain ID information, the MnF may determine, based on the CeMF ID carried in the second request message, a domain ID #1 of a domain configured in an initialization configuration process of the CeMF, and compare the domain ID carried in the second request message with the determined domain ID #1, to obtain a verification result.

For example, when a device layer or a virtualization layer to which the CeMF network element belongs is initialized (started, launched, or the like), the network management MnF identifies an initialization trusted domain of a device to which the CeMF is initialized, that is, identifies an association relationship between the domain ID and the CeMF ID. The MnF may determine, based on the CeMF ID carried in the second request message, the domain ID #1 configured in the initialization configuration process of the CeMF. If the domain ID carried in the second request message is the domain ID #1, the MnF determines that the information sent by the CeMF is successfully verified; or if the domain ID carried in the second request message is not the domain ID #1, the MnF determines that the information sent by the CeMF fails to be verified.

In another possible implementation, when the second request message carries the initialization certificate list information, the MnF may determine, based on the CeMF ID carried in the second request message, an initialization certificate list #1 that corresponds to a managed NF and that is configured in the initialization configuration process of the CeMF, and compare the initialization certificate list carried in the second request message with the determined initialization certificate list #1, to obtain a verification result.

For example, when a device layer or a virtualization layer of an NF is initialized, the MnF records an initialization certificate configured for the NF. The initialization certificate may be configured by a device vendor or configured by an operator. An association relationship between related certificate information and an NF ID is preconfigured in the MnF. The MnF may determine, based on the CeMF ID carried in the second request message, the initialization certificate list #1 that corresponds to the managed NF and that is configured in the initialization configuration process of the CeMF. If the initialization certificate list carried in the second request message is the initialization certificate list #1, the MnF determines that the information sent by the CeMF is successfully verified; or if the initialization certificate list carried in the second request message is not the initialization certificate list #1, the MnF determines that the information sent by the CeMF fails to be verified.

In still another possible implementation, when the second request message carries the initialization certificate list information, the MnF first determines, by using a local configuration file, a vendor (Vendor 1) corresponding to the CeMF ID, and then the MnF verifies whether a signature of each certificate is signed by the Vendor 1, and verifies validity of the signature. If the MnF determines that 90% of certificates are successfully verified, the MnF determines, according to a preconfigured value rule (a verification success rate is greater than 85%), that the information sent by the CeMF is successfully verified. In still another possible implementation, when the second request message carries the NF ID list information, the MnF may determine, based on the CeMF ID carried in the second request message, an NF ID list #1 that corresponds to a managed NF and that is configured in the initialization configuration process of the CeMF, and compare the NF ID list carried in the second request message with the determined NF ID list #1, to obtain a verification result.

For example, when an NF layer, a device layer, or a virtualization layer is initialized, the MnF records an NF ID. The MnF may determine, based on the CeMF ID carried in the second request message, the NF ID list #1 that corresponds to the managed NF and that is configured in the initialization configuration process of the CeMF. If the NF ID list carried in the second request message is the NF ID list #1, the MnF determines that the information sent by the CeMF is successfully verified.

Alternatively, if the NF ID list carried in the second request message is an NF ID list #2, and some NF IDs included in the NF ID list #1 are different from some NF IDs included in the NF ID list #2, the MnF determines that a verification result is a quantity of different NF IDs in the NF ID list #1 and the NF ID list #2.

In still another possible implementation, when the second request message carries the initialization certificate list information, the MnF queries an online certificate status protocol (Online Certificate Status Protocol, OCSP) server of a private CA and queries whether an initialization certificate included in the initialization certificate list is a revoked initialization certificate, and if the initialization certificate is a revoked initialization certificate, determines that the information sent by the CeMF fails to be verified.

It should be understood that the several implementations are merely examples for describing the verification manners of the MnF, and do not constitute any limitation on the protection scope of this application. The information sent by the CeMF may be further verified in another manner. Examples are not enumerated herein.

Specifically, it can be learned from the foregoing verification process executed by the MnF that, in this embodiment, information (for example, initialization information of the certificate application network element, configuration information of the certificate application network element, or management information of the certificate application network element) locally recorded by the MnF is used to assist in the CeMF verification process. In comparison with the foregoing described solution for establishing the initial trust through the private CA, in this embodiment, a procedure of pre-configuring information (for example, pre-configuring the root certificate of the private CA in the CA in the operator PKI) does not need to be executed, but the information recorded by the MnF is directly used.

Further, after performing verification, the MnF may notify the CeEF by using first indication information. The method procedure shown in FIG. 3 further includes the following step.

S440: The MnF sends the first indication information to the CeEF, or the CeEF receives the first indication information from the MnF.

The first indication information indicates whether the first information carried in the second request message is successfully verified.

In a possible implementation, the first indication information directly indicates whether the first information is successfully verified.

For example, the first indication information is one bit, a value "1" indicates that the first information is successfully verified, and a value "0" indicates that the first information fails to be verified.

In another possible implementation, the first indication information indirectly indicates whether the first information is successfully verified. For example, the first indication information indicates whether the first information carried in the second request message is the same as second information locally recorded by the MnF, to indicate whether the first information is successfully verified. If the first indication information indicates that the first information is different from the second information, it is understood as that the first information fails to be verified; or if the first indication information indicates that the first information is the same as the second information, it is understood as that the first information is successfully verified; or if the first indication information indicates that the first information and the second information are different but a degree of difference meets a threshold requirement, it is understood as that the first information is successfully verified.

In this implementation, if the first information carried in the second request message is different from the second information locally recorded by the MnF, the first indication information may further carry indication information #1, where the indication information #1 indicates the degree of difference between the first information and the second information.

For example, if the first information carried in the second request message is a domain ID #1, and an ID that is of a domain to which the CeMF belongs and that is locally recorded by the MnF is a domain ID #1, the MnF indicates, by using the first indication information, that the first information is successfully verified.

For another example, if the first information carried in the second request message is an NF ID list #1, and an ID that is of one or more NFs managed by the CeMF and that is locally recorded by the MnF is an NF ID list #2, the MnF indicates, by using the first indication information, that the first information fails to be verified.

Optionally, in this example, the MnF may further include indication information #1 in the first indication information, to indicate a difference between the NF ID list #1 and the NF ID list #2. For example, if the NF ID list #1 includes an NF ID #1, an NF ID #2, and an NF ID #3, and the NF ID list #2 includes an NF ID #1 and an NF ID #2, the indication information #1 may indicate that the difference between the NF ID list #1 and the NF ID list #2 is that there is a different NF ID.

For another example, if the first information carried in the second request message is the initialization certificate list, the MnF verifies an initialization certificate in the initialization certificate list. If a verification result is that the verification succeeds, the MnF indicates, by using the first indication information, that the first information is successfully verified.

Optionally, the first indication information may further carry a signature of the MnF. For example, when a public key or a certificate of the MnF is preconfigured in the CeEF, the signature of the MnF may be carried to assist the CeEF in verifying whether the first indication information is trustworthy.

It should be understood that, in this embodiment, the CeEF may determine, based on the received first indication information, whether the CeMF is trustworthy. The method procedure shown in FIG. 3 further includes the following step.

S450: The CeEF determines whether the CeMF is trustworthy.

In a possible implementation, when the first indication information indicates that the first information fails to be verified, the CeEF determines that the CeMF is untrusted.

In another possible implementation, when the first indication information indicates that the first information is successfully verified, the CeEF determines that the CeMF is trustworthy.

In still another possible implementation, when the first indication information indicates whether the first information is the same as the second information, to indicate whether the first information is successfully verified, and when the first indication information indicates that the first information carried in the second request message is different from the second information locally recorded by the MnF but the degree of difference between the first information and the second information is less than a preset threshold, the CeEF determines that the CeMF is trustworthy.

Optionally, in this embodiment, the CeEF may further determine, in the following manner, whether the first indication information sent by the management network element is trustworthy.

In a possible implementation, the first indication information is transmitted through a secure connection (for example, SSL), and the CeEF ensures that the first indication information is trustworthy. In this implementation, the CeEF may determine, based on a type of the first indication information (for example, the first indication information is Success_response), whether the first indication information is trustworthy.

In another possible implementation, there is no direct secure channel between the CeEF and the MnF. In this case, the first indication information may carry the signature of the MnF. If the public key or the certificate of the MnF is preconfigured in the CeEF, the CeEF may verify, by using the signature of the MnF carried in the first indication information, whether the first indication information is trustworthy.

It should be understood that the implementations are merely examples for describing how the CeEF determines that the received first indication information is a trusted message, and do not constitute any limitation on the protection scope of this application. The CeEF may further determine, in another manner, whether the received first indication information is the trusted message. For example, the CeEF locally maintains a trusted device list, and determines that the MnF is a trusted device. Examples are not enumerated herein.

Further, after determining whether the CeMF is trustworthy, the CeEF may notify the CeMF by using a first response message. The method procedure shown in FIG. 3 further includes the following step.

S460: The CeEF sends the first response message to the CeMF, or the CeMF receives the first response message from the CeEF.

Specifically, the first response message carries the CeEF ID, and the first response message indicates whether the CeEF trusts the CeMF.

In a possible implementation, the first response message indicates that initial trust is successfully established between the CeMF and the CeEF, or the first response message indicates that the CeEF trusts the CeMF.

In another possible implementation, the first response message indicates that the initial trust fails to be established between the CeMF and the CeEF, or the first response message indicates that the CeEF does not trust the CeMF.

The foregoing steps S410 to S460 describe in detail a process of establishing the initial trust between the CeEF and the CeMF.

Optionally, the method procedure shown in FIG. 3 may further include a procedure of requesting to issue a service certificate. Specifically, the method procedure shown in FIG. 3 may further include the following step.

S411: A first NF sends a service certificate request message to the CeMF, or the CeMF receives the service certificate request message from the first NF.

Specifically, the service certificate request message is used to request to obtain a service certificate. That the first NF and the CeMF are network elements in a same trusted domain may be understood as: The first NF applies for a service certificate through the CeMF.

The service certificate request message carries a first NF ID, and the first NF ID is an ID used by the first NF to apply for a service certificate, and may be an instance ID of the first NF, may be a sender identity field (sender KID) in the service certificate request message, or may be any information identifying the first NF.

Optionally, the service certificate request message may further carry at least one of the following information: a public key, a private key, an initialization certificate, a service type, or the like.

The public key and the private key are generated when the first NF requests the service certificate, and are included by the first NF in the service certificate request message. For example, if the first NF generates a public and private key pair (or referred to as a public-private key pair pk/sk) when requesting the service certificate, the first NF may include the public key and the private key that correspond to the first NF in the service certificate request message for requesting the service certificate. Alternatively, for another example, if the first NF generates a public key when requesting the service certificate, the first NF may include the public key corresponding to the first NF in the service certificate request message for requesting the service certificate.

The initialization certificate is a certificate preconfigured in the first NF. If the initialization certificate is configured for the first NF in an initialization process, the first NF may include the initialization certificate in the service certificate request message. For example, the initialization certificate of the first NF is preconfigured by the MnF in the first NF in the initialization process. For another example, the initialization certificate of the first NF is issued by the vendor/an operator-specific private CA through the private interface.

The service type explicitly or implicitly indicates a type of the requested service certificate, and the CeMF or the CeEF may determine the type of the requested service certificate based on the service type. It should be understood that when the service certificate request message does not carry the service type, the CeMF or the CeEF may determine the type of the service certificate based on other information (for example, historical request information). Details are not described herein.

In a possible implementation, step S411 may be performed before step S410, and it may be understood as that the CeMF initiates an initial trust establishment request only after receiving a service certificate request of the first NF.

In another possible implementation, step S411 may be performed after step S410, for example, step S411 may be performed after step S460, and it may be understood as that the first NF initiates a service certificate request only after initial trust establishment between the CeMF and the CeEF is completed.

It should be understood that the two implementations are merely examples for describing an occasion at which the first NF initiates the service certificate request, and do not constitute any limitation on the protection scope of this application. In this embodiment, the first NF may initiate the service certificate request at any occasion. Examples are not enumerated herein.

Further, after receiving the service certificate request message from the first NF, the CeMF may determine, according to a rule, whether to respond to a request of the first network element for applying for a service certificate. The method procedure shown in FIG. 3 may further include the following step.

S412: The CeMF determines whether to respond to the request of the first NF for applying for a service certificate.

Specifically, the CeMF may determine, according to a preconfigured rule, the request of the first NF for applying for a service certificate, and determine whether to respond to the request of the first NF for applying for a service certificate.

For example, when the type of the service certificate applied for by the first NF is a first type, the CeMF verifies, according to the preconfigured rule, whether the first NF can apply for a service certificate of the first type.

For example, the first NF cannot apply for a service certificate of the first type. If the first NF requests, by using the service certificate request message, to apply for a service certificate of the first type, the CeMF determines to reject a service certificate application of the first NF.

For example, when a type of the first NF is a second type, the CeMF verifies, according to the preconfigured rule, whether the first NF can apply for a service certificate.

For example, when the first NF is an SMF, the first NF may have an IPSec certificate. If the first NF ID or the initialization certificate indicates that the first NF is not the SMF, the CeMF determines to reject a service certificate application of the first NF.

For another example, if the first NF ID or the initialization certificate indicates that the first NF is the SMF, the CeMF determines to apply for a service certificate on behalf of the first NF.

It should be understood that the CeMF determining, according to the preconfigured rule, the request of the first NF for applying for a service certificate includes but is not limited to:

The CeMF directly determines, according to the preconfigured rule, the request of the first NF for applying for a service certificate, and determines whether to respond to the request of the first NF for applying for a service certificate; or
when the CeMF cannot determine, according to the preconfigured rule, the request of the first NF for applying for a service certificate, the CeMF may alternatively verify, according to the preconfigured rule through assistance of another network element or a network management system, whether a certificate application request of the first NF is valid. For example, the CeMF may request the CeEF to assist in verifying whether the certificate application request of the first NF is valid. For a specific procedure, refer to steps S410 to S440 (for example, a function of the first request message is defined as verifying whether the certificate application request of the first NF is valid). Details are not described herein again.

In a possible implementation, when the CeMF determines to reject the service certificate application of the first NF (for example, when the CeMF determines that the certificate request of the first NF is invalid or inappropriate), the CeMF sends a failure indication to the first NF, where the failure indication indicates that the request of the first NF for applying for a service certificate is invalid.

Optionally, the failure indication may further indicate a cause of a failure in requesting the service certificate. For example, the failure indication carries a cause value, where the cause value indicates that the service certificate applied for by the first NF is unavailable or the cause value indicates that the type of the service certificate does not match the type of the first NF.

In another possible implementation, when the CeMF determines to accept the service certificate application of the first NF, the CeMF may determine, based on the type of the requested service certificate, a CeEF to issue the service certificate to the first NF. The CeMF may establish an association relationship with a plurality of CeEFs, and each CeEF may issue only a specific certificate.

The following mainly describes a case in which the CeMF determines to allow the first NF to apply for a service certificate. The method procedure shown in FIG. 3 may further include the following step.

S413: The CeMF sends a service certificate application message to the CeEF, or the CeEF receives the service certificate application message from the CeMF.

Specifically, the service certificate application request carries the CeMF ID.

Optionally, the certificate application request further includes at least one of the following information:
the public key, the private key, the first NF ID, the initialization certificate, or a signature of the CeMF.

The first NF ID or the initialization certificate is used to avoid repeated application for a service certificate, or avoid repeated application for a service certificate through a plurality of CeMFs.

The signature of the CeMF is used to avoid a case in which a third party tampers with a service certificate application. It should be understood that, when the CeEF preconfigures a public key of the CeMF or a certificate, the signature of the CeMF may not be carried, or when there is a secure connection between the CeMF and the CeEF, the signature of the CeMF may not be carried.

The public and private key pair is a parameter used during service certificate application, and may be included by the first NF in the service certificate request message, or may be generated by the CeMF on behalf of the first NF. For example, if the service certificate request message does not carry the public key, the CeMF may alternatively generate, on behalf of the first NF, the public key and/or the private key that correspond/corresponds to the first NF, for certificate application. This is not limited in this application.

Further, after the CeEF receives the service certificate application message from the CeMF, because the initial trust has been established between the CeEF and the CeMF in the procedure shown in steps S410 to S460 in this embodiment (a case in which establishment fails is not described herein), the CeEF may respond to the request of the CeMF. The method procedure shown in FIG. 3 further includes the following step.

S414: The CeEF issues the service certificate to the first NF.

Specifically, the CeEF issues the service certificate to the first NF in response to the service certificate application request of the CeMF.

**In** a possible implementation, the CeEF may directly send the service certificate to the first NF.

In another possible implementation, the CeEF may indirectly send the service certificate to the first NF. For example, the service certificate is forwarded to the first NF through another device.

Optionally, a message that carries the service certificate may further carry the CeMF ID.

In the method procedure shown in FIG. 3, before the certificate is issued, the initial trust is established between the CeEF and the CeMF, and the MnF performs auxiliary verification, so that the service certificate can be issued in a scenario without the private CA.

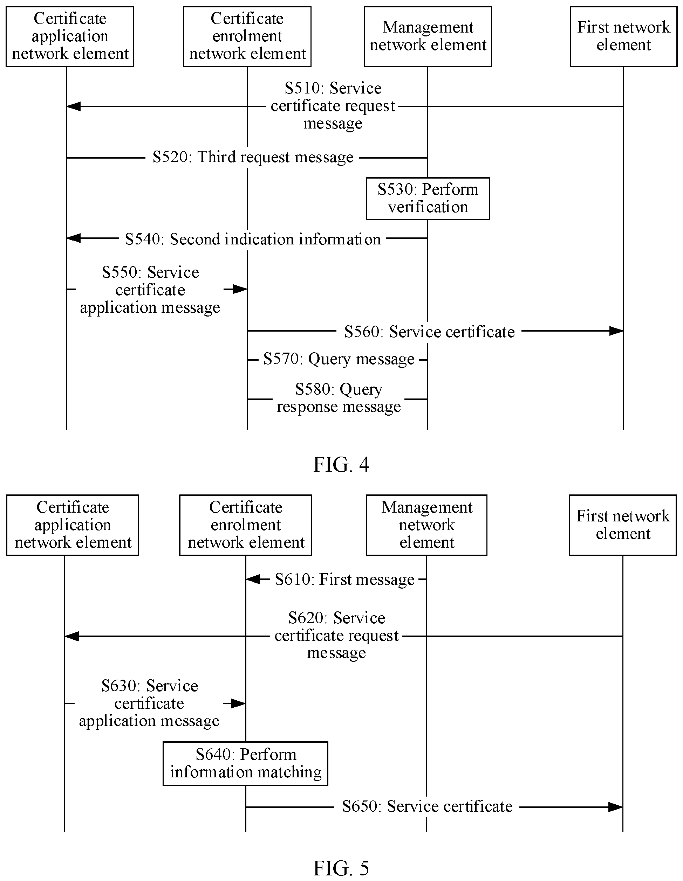

This application further provides a communication method. When a CeEF is able to verify an MnF or preset a certificate of the MnF, offline verification on the CeMF may be implemented. For ease of understanding, the following describes the communication method in detail with reference to FIG. 4.

FIG. 4 is a schematic flowchart of another communication method according to this application. The method includes the following step.

S510: A first NF sends a service certificate request message to the CeMF, or the CeMF receives the service certificate request message from the first NF.

For details, refer to the descriptions of step S411 in FIG. 3. Details are not described herein again.

Further, in this embodiment, after receiving the service certificate request message from the first NF, the CeMF may request the MnF to verify a service certificate request. The method procedure shown in FIG. 4 further includes the following step.

S520: The CeMF sends a third request message to the MnF, or the MnF receives the third request message from the CeMF.

The third request message is used to request the MnF to verify the service certificate request initiated by the first NF. The third request message may be understood as a verification request message.

Specifically, the third request message includes a CeMF ID and a first NF ID.

Optionally, the third request message further includes a domain ID and/or an initialization certificate corresponding to the first NF.

It should be understood that a difference between information carried in the third request message sent by the CeMF to the MnF in the embodiment shown in FIG. 4 and the information carried in the first request message sent by the CeMF to the CeEF in the embodiment shown in FIG. 3 lies in the following: The third request message carries an NF ID of an NF that requests a service certificate, instead of an NF ID list. Similarly, the third request message carries the initialization certificate corresponding to the first NF that requests the service certificate, instead of an initialization certificate list. A reason is that in the embodiment shown in FIG. 4, the CeMF triggers, based on the service certificate request of the first NF, to request the MnF to perform auxiliary verification. In other words, in the embodiment shown in FIG. 4, the CeMF requests the MnF to perform verification for an NF instead of the CeMF. If the verification is performed for the CeMF, and the CeMF may manage one or more NFs, therefore, the NF ID list or the initialization certificate list is carried.

It should be further understood that the MnF in the embodiment shown in FIG. 4 is the same as the MnF in the embodiment shown in FIG. 3, and may record related configuration information in an NF initialization process. For a specific description, refer to the descriptions of the MnF in step S430 in FIG. 3. Details are not described herein again.

In a possible implementation, in this embodiment, before the CeMF sends the third request message to the MnF, interaction may be performed between the CeEF and the CeMF.

For example, after receiving the service certificate request message sent by the NF, the CeMF directly sends a service certificate application message to the CeEF. After the CeEF receives the service certificate application message sent by the CeMF, the CeEF requests, by using a request message #1, the CeMF to assist in the verification, where the request message #1 includes an MnF ID. Optionally, the request message #1 may further include a freshness value, where the freshness value is used to ensure real-time transmission of information.

Further, after receiving the third request message, the MnF performs verification. The method procedure shown in FIG. 4 further includes the following step.

S530: The MnF performs verification.

For a process of performing verification by the MnF, refer to the descriptions of performing verification by the MnF in step S430 in FIG. 3. A difference lies in that the process of performing verification by the MnF in this embodiment is based on the initialization certificate or the first NF ID carried in the third request message, instead of the initialization certificate list or the NF ID list.

For example, the initialization certificate carried in the third request message is an initialization certificate #1. The MnF may determine, based on the first NF ID that is of the first NF and that is carried in the third request message, an initialization certificate #2 configured in an initialization process of the first NF. If the initialization certificate #1 and the initialization certificate #2 are a same initialization certificate, the MnF determines that the CeMF can apply for a service certificate on behalf of the first NF.

For another example, the first NF ID carried in the third request message is an NF ID #1. The MnF may determine, based on the CeMF ID carried in the third request message, an ID corresponding to one or more NFs managed by the CeMF. If the NF ID #1 belongs to the ID corresponding to the one or more NFs, the MnF determines that the CeMF can apply for a service certificate on behalf of the first NF.

For still another example, the initialization certificate carried in the third request message is an initialization certificate #1. The MnF queries an OCSP server of a private CA and queries whether the initialization certificate #1 is a revoked initialization certificate. If the initialization certificate #1 is a revoked initialization certificate, the MnF determines that the CeMF cannot apply for a service certificate on behalf of the first NF.

Further, after performing verification, the MnF may notify the CeMF of a result of the verification by using second indication information. The method procedure shown in FIG. 4 further includes the following step.

S540: The MnF sends the second indication information to the CeMF, or the CeMF receives the second indication information from the MnF.

In a possible implementation, the MnF determines that the CeMF cannot apply for a service certificate on behalf of the first NF, and the second indication information is used to notify that the verification fails.

In another possible implementation, that the MnF determines that the CeMF can apply for a service certificate on behalf of the first NF may be understood as that the verification succeeds. The MnF returns a verification trusted credential to the CeMF by using the second indication information, where the verification trusted credential is a signature of the MnF, and indicates that the verification succeeds.

Specifically, in this implementation, the second indication information includes the CeMF ID, the signature of the MnF, and an event ID.

Optionally, the MnF may locally cache the verification event in the MnF, to help the CeEF perform subsequent verification.

Further, after receiving the second indication information from the MnF, the CeMF may send a service certificate application message to the CeEF. The method procedure shown in FIG. 4 further includes the following step.

S550: The CeMF sends the service certificate application message to the CeEF, or the CeEF receives the service certificate application message from the CeMF.

Specifically, the service certificate application message carries an indication indicating the verification trusted credential. If the CeMF has completed interaction with the CeEF after sending the third request message to the MnF, the CeMF sends the verification trusted credential to the CeEF after receiving the second indication information from the MnF.

The service certificate application message carries the CeMF ID, the pk/sk, and the signature of the MnF (the event ID).

Specifically, after receiving the service certificate application message, the CeEF may respond to the service certificate application message and issue the service certificate. The method procedure shown in FIG. 4 further includes the following step.

S560: The CeEF issues the service certificate to the first NF.

For details, refer to the descriptions of step S414 in FIG. 3. Details are not described herein again.

In addition, in this embodiment, the CeEF may request the MnF to verify whether the service certificate can be issued to the first NF.

The method procedure shown in FIG. 4 may further include the following step.

S570: The CeEF sends a query message to the MnF, or the MnF receives the query message from the CeEF.

The query message is used to request the MnF to verify whether the CeMF can apply for a service certificate on behalf of the first NF.

S580: The MnF sends a query response message to the CeEF, or the CeEF receives the query response message from the MnF.

The query response message indicates that the verification succeeds or fails.

For example, after receiving the service certificate application message, the CeEF sends the query message to the MnF, where the query message carries the event ID and the CeMF ID, and is used to query whether the CeMF indicated by the CeMF ID can execute an event indicated by the event ID. For example, if the CeMF indicated by the CeMF ID applies for a service certificate on behalf of the first NF, and the verification event locally cached by the MnF indicates that the CeMF can apply for a service certificate on behalf of the first NF, the CeEF is notified, by using a query response message, that the event can be executed, and the CeEF may issue the service certificate to the first NF.

In this embodiment, the MnF verifies an event before the CeEF determines whether to issue a service certificate. Therefore, in this embodiment, the CeEF may request the MnF to verify, for a plurality of events, whether service certificates can be issued to a plurality of NFs respectively.

For example, after receiving a service certificate request message #1 for requesting to issue a service certificate to an NF #1 and a service certificate request message #2 for requesting to issue a service certificate to an NF #2, the CeEF sends a query message to the MnF, where the query message carries an event ID #1, a CeMF ID #1, an event ID #2, and an CeMF ID #2, the event ID #1 and the CeMF ID #1 indicate that a CeMF #1 indicated by the CeMF ID #1 requests to issue the service certificate to the NF #1, and the event ID #2 and the CeMF ID #2 indicate that a CeMF #2 indicated by the CeMF ID #2 requests to issue the service certificate to the NF #2. If the MnF indicates, based on the locally cached verification event, that the CeMF #1 can apply for a service certificate for the NF #1, the MnF notifies, by using the query response message, the CeEF that an event #1 indicated by the event ID #1 can be executed, and the CeEF may issue the service certificate to the NF #1; or if the MnF indicates, based on the locally cached verification event, that the CeMF #2 cannot apply for a service certificate for the NF #2, the MnF notifies, by using the query response message, the CeEF that an event #2 indicated by the event ID #2 cannot be executed, and the CeEF may not issue the service certificate to the NF #2.

This application further provides a communication method. Related information may be preconfigured in a CeMF to verify a CeMF. For ease of understanding, the following describes the communication method in detail with reference to FIG. 5.

FIG. 5 is a schematic flowchart of still another communication method according to this application. The method includes the following step.

S610: An MnF sends a first message to a CeEF.

The first message includes a CeMF ID and information corresponding to the CeMF ID. Specifically, the information corresponding to the CeMF ID includes at least one of the following information:
an NF ID list, an initialization certificate list, a domain ID, or an NF type.

In this embodiment, the CeEF receives and stores the first message sent by the MnF. In other words, mapping information of a trusted domain in which the CeMF and an NF are located is preconfigured in the CeEF.

For example, the CeEF locally maintains the mapping information of the trusted domain in which the CeMF and the NF are located, as shown in Table 2:

| | NF ID | Domain ID | Certificate ID | NF Type |
|---|---|---|---|---|
| CeMF 1 | 1000001 | 1 | 67acb1 | SMF |
| | 1000002 | 1 | 67acb2 | SMF |
| CeMF 2 | 1000003 | 2 | - | - |
| | 1000004 | 2 | - | - |
| | 1000005 | 2 | - | AMF |
| ... | ... | ... | ... | ... |

S620: A first NF sends a service certificate request message to the CeMF, or the CeMF receives the service certificate request message from the first NF.

For details, refer to the descriptions of step S411 in FIG. 3. Details are not described herein again.

S630: The CeMF sends a service certificate application message to the CeEF, or the CeEF receives the service certificate application message from the CeMF.

S640: The CeEF performs information matching.

After receiving the service certificate application message from the CeMF, the CeEF matches whether information in the table is consistent with information carried in the service certificate application message sent by the CeMF. If the information is consistent, the CeEF issues a service certificate.

For example, the CeMF ID carried in the service certificate application message indicates that the CeMF requesting to issue the service certificate is the CeMF 1, and the NF ID carried in the service certificate application message is 1000001. The CeEF determines, based on a locally cached mapping relationship (as shown in Table 2), that an NF whose NF ID is 1000001 is managed by the CeMF 1, and issues the service certificate to the first NF.

It should be understood that, in this embodiment, an NF type may be configured in the locally configured information of the CeEF, to indicate that the CeEF may determine, based on the type, whether the first NF meets a condition for applying for a certificate.

For example, the service certificate application message sent by the CeMF in step S630 carries the NF ID and an IPSec certificate is requested. However, the CeEF determines, based on the local table, that a type corresponding to the NF ID is an AMF, and determines, according to a preconfigured rule, that the IPSec certificate is not needed for the type. In this case, a failure response may be sent, to indicate that an incorrect certificate is applied for based on a certificate application request of the first NF.

For example, when the CeEF successfully performs information matching and determines that the service certificate can be issued to the first NF, the method procedure shown in FIG. 5 further includes the following step.

S650: The CeEF issues the service certificate to the first NF.

For details, refer to the descriptions of step S414 in FIG. 3. Details are not described herein again.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description (for example, an NF or an MnF). It should be understood that a specific form of the device is not limited in embodiments of this application. For example, all devices that can implement a same function in the future are applicable to embodiments of this application.

It may be understood that, in the foregoing method embodiments, methods and operations implemented by the device (for example, the NF or the MnF) may alternatively be implemented by a component (for example, a chip or a circuit) of the device.

The foregoing describes in detail the communication method provided in embodiments of this application with reference to FIG. 3 to FIG. 5. The foregoing communication method is mainly described from a perspective of interaction between protocol layers of the terminal device. It may be understood that, to implement the foregoing functions, the terminal device includes corresponding hardware structures and/or software modules for performing the functions.

A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

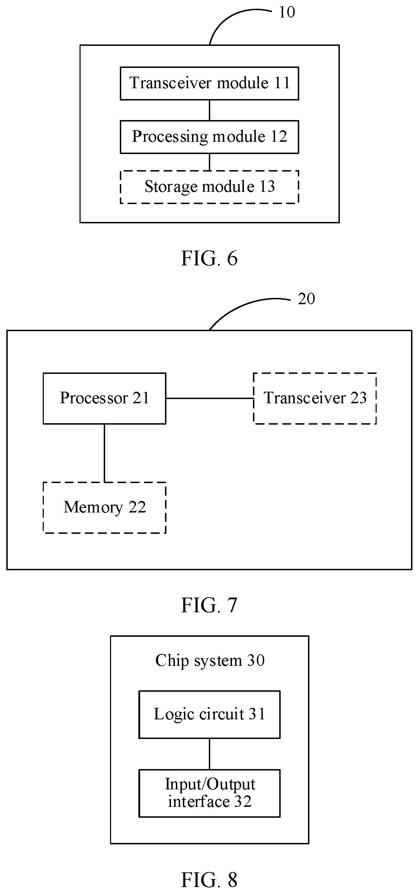

The following describes in detail, with reference to FIG. 6 to FIG. 8, a communication apparatus provided in this application. It should be understood that descriptions of the apparatus embodiments correspond to the descriptions of the method embodiments. Therefore, for content that is not described in detail, refer to the foregoing method embodiments. For brevity, some content is not described again.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 6 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing. Alternatively, the transceiver module 11 is configured to perform receiving and sending related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, so that the apparatus implements an action of the device in the foregoing method embodiments.

In a design, the apparatus 10 may correspond to the CeEF in the foregoing method embodiments, or may be a component (for example, a chip) of the CeEF.

The apparatus 10 may implement a corresponding step or procedure performed by the CeEF in the foregoing method embodiments. The transceiver module 11 may be configured to perform receiving and sending related operations of the CeEF in the foregoing method embodiments. The processing module 12 may be configured to perform a processing related operation of the CeEF in the foregoing method embodiments.

In a possible implementation, the transceiver module 11 is configured to receive a first request message from a certificate application network element, where the first request message is used to request to authenticate the certificate application network element, the first request message includes an identity of the certificate application network element and first information, and the first information is used to authenticate the certificate application network element; the transceiver module 11 is further configured to send a second request message to a management network element, where the second request message is used to request to verify the first information, and the second request message includes the first information; the transceiver module 11 is further configured to receive first indication information from the management network element, where the first indication information indicates whether the first information is successfully verified; and the processing module 12 is configured to determine, based on the first indication information, whether the certificate application network element is a trusted network element.

In another possible implementation, the transceiver module 11 is configured to receive a service certificate application message from a certificate application network element, where the service certificate application message is used to request the communication apparatus to issue a service certificate, and the service certificate application message includes an identity of the certificate application network element and a signature of a management network element; and the transceiver module 11 is further configured to issue the service certificate to a first network element, where the signature of the management network element is a signature based on an event identity, and the event identity identifies that the certificate application network element requests to apply for a service certificate on behalf of the first network element.

In still another possible implementation, the transceiver module 11 is configured to receive a first message from a management network element, where the first message includes information that is related to at least one certificate application network element and that is locally recorded by the management network element; the transceiver module 11 is further configured to receive a service certificate application message from the certificate application network element, where the service certificate application message is used to request the communication apparatus to issue a service certificate; and the processing module 12 is configured to determine, based on the first message, whether to issue a service certificate.

When the apparatus 10 is configured to perform the method in FIG. 3, the transceiver module 11 may be configured to perform steps of receiving and sending information in the method, for example, step S410, step S420, step S460, step S413, and step S414; and the processing module 12 may be configured to perform a processing step in the method, for example, step S450.

When the apparatus 10 is configured to perform the method in FIG. 4, the transceiver module 11 may be configured to perform steps of receiving and sending information in the method, for example, step S550, step S560, step S570, and step S580; and the processing module 12 may be configured to perform a processing step in the method.

When the apparatus 10 is configured to perform the method in FIG. 5, the transceiver module 11 may be configured to perform steps of receiving and sending information in the method, for example, step S610 and step S630; and the processing module 12 may be configured to perform a processing step in the method, for example, step S640.

It should be understood that a specific process in which the units perform the foregoing corresponding steps is described in detail in the foregoing method embodiments. For brevity, details are not described herein again.

In another design, the apparatus 10 may correspond to the CeMF in the foregoing method embodiments, or may be a component (for example, a chip) of the CeMF.

The apparatus 10 may implement a corresponding step or procedure performed by the CeMF in the foregoing method embodiments. The transceiver module 11 may be configured to perform receiving and sending related operations of the CeMF in the foregoing method embodiments. The processing module 12 may be configured to perform a processing related operation of the CeMF in the foregoing method embodiments.

In a possible implementation, the transceiver module 11 is configured to send a first request message to a certificate enrolment network element, where the first request message is used to request to authenticate the communication apparatus, the first request message includes an identity of the communication apparatus and first information, and the first information is used to authenticate the communication apparatus; and the transceiver module 11 is further configured to receive a first response message from the certificate enrolment network element, where the first response message indicates whether the communication apparatus is a trusted network element, the certificate enrolment network element determines, based on first indication information, whether the communication apparatus is a trusted network element, and the first indication information is feedback information in which the certificate enrolment network element requests a management network element to verify the first information.

In another possible implementation, the transceiver module 11 is configured to receive a service certificate request message from a first network element, where the service certificate request message is used to request the communication apparatus to apply for a service certificate on behalf of the first network element; the transceiver module 11 is further configured to send a third request message to a management network element, where the third request message is used to request the management network element to verify whether the communication apparatus can apply for a service certificate on behalf of the first network element; and the transceiver module 11 is further configured to receive second indication information from the management network element, where the second indication information indicates whether the communication apparatus can apply for a service certificate on behalf of the first network element, the second indication information includes a signature of the management network element and an event identity, the signature of the management network element is a signature based on the event identity, and the event identity identifies that the communication apparatus requests to apply for a service certificate on behalf of the first network element.

When the apparatus 10 is configured to perform the method in FIG. 3, the transceiver module 11 may be configured to perform steps of receiving and sending information in the method, for example, step S410, step S460, step S411, step S413, and step S414; and the processing module 12 may be configured to perform a processing step in the method, for example, step S412.

When the apparatus 10 is configured to perform the method in FIG. 4, the transceiver module 11 may be configured to perform steps of receiving and sending information in the method, for example, step S510, step S520, step S540, and S550; and the processing module 12 may be configured to perform a processing step in the method.

When the apparatus 10 is configured to perform the method in FIG. 5, the transceiver module 11 may be configured to perform steps of receiving and sending information in the method, for example, step S620 and step S630; and the processing module 12 may be configured to perform a processing step in the method.

It should be understood that a specific process in which the units perform the foregoing corresponding steps is described in detail in the foregoing method embodiments. For brevity, details are not described herein again.

In still another design, the apparatus 10 may correspond to the MnF in the foregoing method embodiment, or may be a component (for example, a chip) of the MnF.

The apparatus 10 may implement a corresponding step or procedure performed by the MnF in the foregoing method embodiments. The transceiver module 11 may be configured to perform receiving and sending related operations of the MnF in the foregoing method embodiments. The processing module 12 may be configured to perform a processing related operation of the MnF in the foregoing method embodiments.

In a possible implementation, the transceiver module 11 is configured to receive a second request message from a certificate enrolment network element, where the second request message is used to request to verify first information, and the second request message includes the first information; the processing module 12 is configured to verify the first information based on second information locally recorded by the communication apparatus, where the second information is information related to a certificate application network element; and the transceiver module 11 is further configured to send first indication information to the certificate enrolment network element, where the first indication information indicates whether the first information is successfully verified.

In another possible implementation, the transceiver module 11 is configured to receive a third request message from a certificate application network element, where the third request message is used to request the communication apparatus to verify whether the certificate application network element can apply for a service certificate on behalf of a first network element; the processing module 12 is configured to verify, based on second information locally recorded by the management network element, whether the certificate application network element can apply for a service certificate on behalf of the first network element, where the second information is information related to the certificate application network element; and the transceiver module 11 is further configured to send second indication information to the certificate enrolment network element, where the second indication information indicates whether the certificate application network element can apply for a service certificate on behalf of the first network element, the second indication information includes a signature of the communication apparatus and an event identity, the signature of the communication apparatus is a signature based on the event identity, and the event identity identifies that the certificate application network element requests to apply for a service certificate on behalf of the first network element.

When the apparatus 10 is configured to perform the method in FIG. 3, the transceiver module 11 may be configured to perform steps of receiving and sending information in the method, for example, step S420 and step S440; and the processing module 12 may be configured to perform a processing step in the method, for example, step S430.

When the apparatus 10 is configured to perform the method in FIG. 4, the transceiver module 11 may be configured to perform steps of receiving and sending information in the method, for example, step S520, step S540, step S570, and step S580; and the processing module 12 may be configured to perform a processing step in the method, for example, step S530.

When the apparatus 10 is configured to perform the method in FIG. 5, the transceiver module 11 may be configured to perform steps of receiving and sending information in the method, for example, step S610; and the processing module 12 may be configured to perform a processing step in the method.

It should be understood that a specific process in which the units perform the foregoing corresponding steps is described in detail in the foregoing method embodiments. For brevity, details are not described herein again.

It should also be understood that the apparatus 10 herein is presented in a form of a functional module. The term "module" herein may be an application specific integrated circuit (application specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described functions. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by a device (for example, the terminal device or the network device) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit such as the processing module may be replaced with a processor, to respectively perform sending and receiving operations and a related processing operation in the method embodiments.

In addition, the transceiver module 11 may alternatively be a transceiver circuit (for example, may include a receiver circuit and a transmitter circuit), and the processing module may be a processing circuit.

FIG. 7 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 7, the apparatus 20 further includes the memory 22, and the memory 22 is configured to store the computer program or the instructions and/or the data. The memory 22 and the processor 21 may be integrated together, or may be disposed separately. Optionally, there are one or more memories 22.

Optionally, as shown in FIG. 7, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement operations performed by the CeEF in the foregoing method embodiments.

In another solution, the apparatus 20 is configured to implement operations performed by the CeMF in the foregoing method embodiments.

In still another solution, the apparatus 20 is configured to implement operations performed by the MnF in the foregoing method embodiments.

It should be understood that, the processor mentioned in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 8 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to and connected to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information into the chip system 30 for processing.

In a solution, the chip system 30 is configured to implement operations performed by the CeEF, the CeMF, or the MnF in the foregoing method embodiments.

For example, the logic circuit 31 is configured to implement a processing-related operation performed by the CeEF, the CeMF, or the MnF in the foregoing method embodiments; and the input/output interface 32 is configured to implement a sending and/or receiving-related operation performed by the CeEF, the CeMF, or the MnF in the foregoing method embodiments.

An embodiment of this application further provides a computer-readable storage medium. The computer-readable storage medium stores computer instructions used to implement the method performed by the CeEF, the CeMF, or the MnF in the foregoing method embodiments.

For example, when the computer instructions are executed by a computer, the computer is enabled to implement the method performed by the CeEF, the CeMF, or the MnF in the foregoing method embodiments.

An embodiment of this application further provides a computer program product, including instructions. When the instructions are executed by a computer, the method performed by the CeEF, the CeMF, or the MnF in the foregoing method embodiments is implemented.

An embodiment of this application further provides a communication system, including the foregoing CeEF, CeMF, and MnF.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a certificate application network element, a first request message to a certificate enrolment network element, wherein the first request message is used to request to authenticate the certificate application network element, the first request message comprises an identity of the certificate application network element and first information, and the first information is used to authenticate the certificate application network element;
sending, by the certificate enrolment network element, a second request message to a management network element, wherein the second request message is used to request to verify the first information, and the second request message comprises the first information;
verifying, by the management network element, the first information based on second information locally recorded by the management network element, wherein the second information is information related to the certificate application network element;
sending, by the management network element, first indication information to the certificate enrolment network element, wherein the first indication information indicates whether the first information is successfully verified; and
determining, by the certificate enrolment network element based on the first indication information, whether the certificate application network element is a trusted network element.

2. The method according to claim 1, wherein the first information comprises at least one of the following information:
a network element identity list, a domain identity, or an initialization certificate list, wherein the network element identity list indicates at least one network element managed by the certificate application network element, the domain identity indicates a domain in which the certificate application network element is located, and the initialization certificate list indicates at least one initialization certificate configured for the at least one network element managed by the certificate application network element.

3. The method according to claim 1 or 2, wherein the determining, by the certificate enrolment network element based on the first indication information, whether the certificate application network element is a trusted network element comprises:
when the first indication information indicates that the first information is successfully verified, determining, by the certificate enrolment network element, that the certificate application network element is a trusted network element; or
when the first indication information indicates that the first information fails to be verified, determining, by the certificate enrolment network element, that the certificate application network element is an untrusted network element.

4. The method according to any one of claims 1 to 3, wherein the first indication information further comprises a signature of the management network element, and the signature of the management network element is used to verify whether the first indication information is trustworthy.

5. The method according to any one of claims 1 to 4, wherein the method further comprises:
sending, by the certificate enrolment network element, a first response message to the certificate application network element, wherein the first response message indicates whether the certificate application network element is a trusted network element.

6. The method according to any one of claims 1 to 5, wherein the method further comprises:
sending, by a first network element, a service certificate request message to the certificate application network element, wherein the service certificate request message is used to request the certificate application network element to apply for a service certificate on behalf of the first network element; and
determining, by the certificate application network element according to a rule, whether to respond to a request of the first network element for applying for a service certificate.

7. The method according to claim 6, wherein the service certificate request message comprises an identity of the first network element and at least one of the following information:
a public key corresponding to the first network element, a private key corresponding to the first network element, an initialization certificate configured for the first network element, or service type indication information.

8. The method according to claim 6 or 7, wherein when a type of the service certificate requested by using the service certificate request message is a first type, the determining, by the certificate application network element according to a rule, whether to respond to a request of the first network element for applying for a service certificate comprises:
verifying, by the certificate application network element according to the rule, whether the first network element can apply for a service certificate of the first type; and
when the verification fails, the method further comprises:
sending, by the certificate application network element, a failure indication to the first network element, wherein the failure indication indicates that the request of the first network element for applying for a service certificate is invalid.

9. The method according to any one of claims 1 to 8, wherein when the first information is the network element identity list, and an identity that is of one or more network elements managed by the certificate application network element and that is locally recorded by the management network element constitutes the network element identity list, the management network element determines that the first information is successfully verified; or
when the first information is the initialization certificate list, an initialization certificate that corresponds to one or more network elements managed by the certificate application network element and that is locally recorded by the management network element constitutes the initialization certificate list, and all initialization certificates in the initialization certificate list are valid, the management network element determines that the first information is successfully verified; or
when the first information is the domain identity, and an identity that is of the domain to which the certificate application network element belongs and that is locally recorded by the management network element is the domain identity, the management network element determines that the first information is successfully verified.

10. The method according to any one of claims 1 to 9, wherein the second information comprises at least one of the following information:
initialization information of the certificate application network element, configuration information of the certificate application network element, or management information of the certificate application network element.

11. A communication method, comprising:
receiving, by a certificate enrolment network element, a first request message from a certificate application network element, wherein the first request message is used to request to authenticate the certificate application network element, the first request message comprises an identity of the certificate application network element and first information, and the first information is used to authenticate the certificate application network element;
sending, by the certificate enrolment network element, a second request message to a management network element, wherein the second request message is used to request to verify the first information, and the second request message comprises the first information;
receiving, by the certificate enrolment network element, first indication information from the management network element, wherein the first indication information indicates whether the first information is successfully verified; and
determining, by the certificate enrolment network element based on the first indication information, whether the certificate application network element is a trusted network element.

12. The method according to claim 11, wherein the first information comprises at least one of the following information:
a network element identity list, a domain identity, or an initialization certificate list, wherein the network element identity list indicates at least one network element managed by the certificate application network element, the domain identity indicates a domain in which the certificate application network element is located, and the initialization certificate list indicates at least one initialization certificate configured for the at least one network element managed by the certificate application network element.

13. The method according to claim 11 or 12, wherein the determining, by the certificate enrolment network element based on the first indication information, whether the certificate application network element is a trusted network element comprises:
when the first indication information indicates that the first information is successfully verified, determining, by the certificate enrolment network element, that the certificate application network element is a trusted network element; or
when the first indication information indicates that the first information fails to be verified, determining, by the certificate enrolment network element, that the certificate application network element is an untrusted network element.

14. The method according to any one of claims 11 to 13, wherein the first indication information further comprises a signature of the management network element, and the signature of the management network element is used to verify whether the first indication information is trustworthy.

15. The method according to any one of claims 11 to 14, wherein the method further comprises:
sending, by the certificate enrolment network element, a first response message to the certificate application network element, wherein the first response message indicates whether the certificate application network element is a trusted network element for the certificate enrolment network element.

16. A communication system, comprising a certificate application network element, a certificate enrolment network element, and a management network element, wherein
the certificate application network element is configured to send a first request message to the certificate enrolment network element, wherein the first request message is used to request to authenticate the certificate application network element, the first request message comprises an identity of the certificate application network element and first information, and the first information is used to authenticate the certificate application network element;
the certificate enrolment network element is configured to send a second request message to the management network element, wherein the second request message is used to request to verify the first information, and the second request message comprises the first information;
the management network element is configured to verify the first information based on second information locally recorded by the management network element, wherein the second information is information related to the certificate application network element;
the management network element is configured to send first indication information to the certificate enrolment network element, wherein the first indication information indicates whether the first information is successfully verified; and
the certificate enrolment network element is further configured to determine, based on the first indication information, whether the certificate application network element is a trusted network element.

17. The communication system according to claim 16, wherein that the certificate enrolment network element is configured to determine, based on the first indication information, whether the certificate application network element is a trusted network element comprises:
when the first indication information indicates that the first information is successfully verified, determining, by the certificate enrolment network element, that the certificate application network element is a trusted network element; or
when the first indication information indicates that the first information fails to be verified, determining, by the certificate enrolment network element, that the certificate application network element is an untrusted network element.

18. The communication system according to claim 16 or 17, wherein the certificate enrolment network element is further configured to send a first response message to the certificate application network element, wherein the first response message indicates whether the certificate application network element is a trusted network element for the certificate enrolment network element.

19. The communication system according to any one of claims 16 to 18, wherein the communication system further comprises a first network element, wherein
the first network element is configured to send a service certificate request message to the certificate application network element, wherein the service certificate request message is used to request the certificate application network element to apply for a service certificate on behalf of the first network element; and
the certificate application network element is further configured to determine, according to a rule, whether to respond to a request of the first network element for applying for a service certificate.

20. The communication system according to claim 19, wherein when a type of the service certificate requested by using the service certificate request message is a first type, that the certificate application network element is configured to determine, according to a rule, whether to respond to a request of the first network element for applying for a service certificate comprises:
the certificate application network element is configured to verify, according to the rule, whether the first network element can apply for a service certificate of the first type; and
when the verification fails, the certificate application network element is further configured to send a failure indication to the first network element, wherein the failure indication indicates that the request of the first network element for applying for a service certificate is invalid.

21. The communication system according to any one of claims 16 to 20, wherein when the first information is a network element identity list, and an identity that is of one or more network elements managed by the certificate application network element and that is locally recorded by the management network element constitutes the network element identity list, the management network element determines that the first information is successfully verified; or
when the first information is the initialization certificate list, an initialization certificate that corresponds to one or more network elements managed by the certificate application network element and that is locally recorded by the management network element constitutes the initialization certificate list, and all initialization certificates in the initialization certificate list are valid, the management network element determines that the first information is successfully verified; or
when the first information is the domain identity, and an identity that is of the domain to which the certificate application network element belongs and that is locally recorded by the management network element is the domain identity, the management network element determines that the first information is successfully verified.

22. A communication apparatus, wherein the apparatus comprises: a module configured to perform the method according to any one of claims 1 to 10, or a module configured to perform the method according to any one of claims 11 to 15.

23. A communication apparatus, comprising:
a processor, configured to execute a computer program stored in a memory, to enable the apparatus to perform the method according to any one of claims 1 to 10, or to enable the apparatus to perform the method according to any one of claims 11 to 15.

24. A computer program product, wherein the computer program product comprises instructions used to perform the method according to any one of claims 1 to 10, or the computer program product comprises instructions used to perform the method according to any one of claims 11 to 15.

25. A computer-readable storage medium, wherein the computer-readable storage medium stores a computer program; and when the computer program is run on a computer, the computer is enabled to perform the method according to any one of claims 1 to 10, or the computer is enabled to perform the method according to any one of claims 11 to 15.

26. A communication method, comprising:
receiving, by a management network element, a second request message from a certificate enrolment network element, wherein the second request message is used to request to verify first information, and the second request message comprises the first information; verifying, by the management network element, the first information based on second information locally recorded by the management network element, wherein the second information is information related to a certificate application network element; and sending, by the management network element, first indication information to the certificate enrolment network element, wherein the first indication information indicates whether the first information is successfully verified.

27. The method according to claim 26, wherein the first information comprises at least one of the following information: a network element identity list, a domain identity, or an initialization certificate list, wherein the network element identity list indicates at least one network element managed by the certificate application network element, the domain identity indicates a domain in which the certificate application network element is located, and the initialization certificate list indicates at least one initialization certificate configured for the at least one network element managed by the certificate application network element.

28. The method according to claim 26 or 27, wherein when the first information is the network element identity list, and an identity that is of one or more network elements managed by the certificate application network element and that is locally recorded by the management network element constitutes the network element identity list, the management network element determines that the first information is successfully verified; or when the first information is the initialization certificate list, an initialization certificate that corresponds to one or more network elements managed by the certificate application network element and that is locally recorded by the management network element constitutes the initialization certificate list, and all initialization certificates in the initialization certificate list are valid, the management network element determines that the first information is successfully verified; or when the first information is the domain identity, and an identity that is of the domain to which the certificate application network element belongs and that is locally recorded by the management network element is the domain identity, the management network element determines that the first information is successfully verified.

29. The method according to any one of claims 26 to 28, wherein the first indication information further comprises a signature of the management network element, and the signature of the management network element is used to verify whether the first indication information is trustworthy.

30. A communication method, comprising:
receiving, by a certificate application network element, a service certificate request message from a first network element, wherein the service certificate request message is used to request the certificate application network element to apply for a service certificate on behalf of the first network element;
sending, by the certificate application network element, a third request message to a management network element, wherein the third request message is used to request the management network element to verify whether the certificate application network element can apply for a service certificate on behalf of the first network element;
verifying, by the management network element based on second information locally recorded by the management network element, whether the certificate application network element can apply for a service certificate on behalf of the first network element, wherein the second information is information related to the certificate application network element; and
sending, by the management network element, second indication information to the certificate application network element, wherein the second indication information indicates whether the certificate application network element can apply for a service certificate on behalf of the first network element, the second indication information comprises a signature of the management network element and an event identity, the signature of the management network element is a signature based on the event identity, and the event identity identifies that the certificate application network element applies for a service certificate on behalf of the first network element.

31. The method according to claim 30, wherein the method further comprises:
sending, by the certificate application network element, a service certificate application message to a certificate enrolment network element, wherein the service certificate application message is used to request the certificate enrolment network element to issue the service certificate to the first network element, and the service certificate application message comprises an identity of the certificate application network element and the signature of the management network element.

32. The method according to claim 30 or 31, wherein the method further comprises:
sending, by the certificate enrolment network element, a query message to the management network element, wherein the query message is used to query whether the certificate application network element can apply for a service certificate on behalf of the first network element, and the query message comprises the identity of the certificate application network element and the event identity; and
receiving, by the certificate enrolment network element, a query response message sent by the management network element, wherein the query response message indicates whether the certificate application network element can apply for a service certificate on behalf of the first network element.

33. The method according to any one of claims 30 to 32, wherein when the third request message comprises an identity of the first network element, the verifying, by the management network element, whether the certificate application network element can apply for a service certificate on behalf of the first network element comprises:
when an identity that is of one or more network elements managed by the certificate application network element and that is locally recorded by the management network element comprises the identity of the first network element, determining, by the management network element, that the certificate application network element can apply for a service certificate on behalf of the first network element; or
when the second request message comprises an initialization certificate corresponding to the first network element, the verifying, by the management network element, whether the certificate application network element can apply for a service certificate on behalf of the first network element comprises: when an initialization certificate that corresponds to one or more network elements managed by the certificate application network element and that is locally recorded by the management network element comprises the initialization certificate corresponding to the first network element, determining, by the management network element, that the certificate application network element can apply for a service certificate on behalf of the first network element.

34. A communication method, comprising:
receiving, by a certificate enrolment network element, a service certificate application message from a certificate application network element, wherein the service certificate application message is used to request the certificate enrolment network element to issue a service certificate, and the service certificate application message comprises an identity of the certificate application network element and a signature of a management network element; and issuing, by the certificate enrolment network element, the service certificate to a first network element, wherein the signature of the management network element is a signature based on an event identity, and the event identity identifies that the certificate application network element requests to apply for a service certificate on behalf of the first network element.

35. The method according to claim 34, wherein the method further comprises: sending, by the certificate enrolment network element, a query message to the management network element, wherein the query message is used to query whether the certificate application network element can apply for a service certificate on behalf of the first network element, and the query message comprises the identity of the certificate application network element and the event identity; and receiving, by the certificate enrolment network element, a query response message sent by the management network element, wherein the query response message indicates whether the certificate application network element can apply for a service certificate on behalf of the first network element.

36. A communication method, comprising:
receiving, by a certificate application network element, a service certificate request message from a first network element, wherein the service certificate request message is used to request the certificate application network element to apply for a service certificate on behalf of the first network element;
sending, by the certificate application network element, a third request message to a management network element, wherein the third request message is used to request the management network element to verify whether the certificate application network element can apply for a service certificate on behalf of the first network element; and
receiving, by the certificate application network element, second indication information from the management network element, wherein the second indication information indicates whether the certificate application network element can apply for a service certificate on behalf of the first network element, the second indication information comprises a signature of the management network element and an event identity, the signature of the management network element is a signature based on the event identity, and the event identity identifies that the certificate application network element requests to apply for a service certificate on behalf of the first network element.

37. The method according to claim 36, wherein the method further comprises:
sending, by the certificate application network element, a service certificate application message to a certificate enrolment network element, wherein the service certificate application message is used to request the certificate enrolment network element to issue the service certificate to the first network element, and the service certificate application message comprises an identity of the certificate application network element and the signature of the management network element.

38. A communication method, comprising:
receiving, by a management network element, a third request message from a certificate application network element, wherein the third request message is used to request the management network element to verify whether the certificate application network element can apply for a service certificate on behalf of a first network element;
verifying, by the management network element based on second information locally recorded by the management network element, whether the certificate application network element can apply for a service certificate on behalf of the first network element, wherein the second information is information related to the certificate application network element; and
sending, by the management network element, second indication information to a certificate enrolment network element, wherein the second indication information indicates whether the certificate application network element can apply for a service certificate on behalf of the first network element, the second indication information comprises a signature of the management network element and an event identity, the signature of the management network element is a signature based on the event identity, and the event identity identifies that the certificate application network element requests to apply for a service certificate on behalf of the first network element.

39. The method according to claim 38, wherein when the third request message comprises an identity of the first network element, the verifying, by the management network element, whether the certificate application network element can apply for a service certificate on behalf of the first network element comprises:
when an identity that is of one or more network elements managed by the certificate application network element and that is locally recorded by the management network element comprises the identity of the first network element, determining, by the management network element, that the certificate application network element can apply for a service certificate on behalf of the first network element; or
when the second request message comprises an initialization certificate corresponding to the first network element, the verifying, by the management network element, whether the certificate application network element can apply for a service certificate on behalf of the first network element comprises: when an initialization certificate that corresponds to one or more network elements managed by the certificate application network element and that is locally recorded by the management network element comprises the initialization certificate corresponding to the first network element, determining, by the management network element, that the certificate application network element can apply for a service certificate on behalf of the first network element.

40. The method according to claim 38 or 39, wherein the method further comprises: receiving, by the management network element, a query message from the certificate enrolment network element, wherein the query message is used to query whether the certificate application network element can apply for a service certificate on behalf of the first network element, and the query message comprises an identity of the certificate application network element and the event identity; and sending, by the management network element, a query response message to the certificate enrolment network element, wherein the query response message indicates whether the certificate application network element can apply for a service certificate on behalf of the first network element.

41. A communication method, comprising:
receiving, by a certificate enrolment network element, a first message from a management network element, wherein the first message comprises information that is related to at least one certificate application network element and that is locally recorded by the management network element; receiving, by the certificate enrolment network element, a service certificate application message from the certificate application network element, wherein the service certificate application message is used to request the certificate enrolment network element to issue a service certificate; and determining, by the certificate enrolment network element based on the first message, whether to issue a service certificate.

42. The method according to claim 41, wherein the first message comprises a correspondence between an identity of the certificate application network element and at least one of the following information: a network element identity, a domain identity, an initialization certificate identity, or a network element type.

43. A communication apparatus, wherein the apparatus comprises a module configured to perform the method according to any one of claims 26 to 29, a module configured to perform the method according to claim 34 or 35, a module configured to perform the method according to claim 36 or 37, a module configured to perform the method according to any one of claims 38 to 40, or a module configured to perform the method according to claim 41 or 42.

44. A communication apparatus, comprising:
a processor, configured to execute a computer program stored in a memory, to enable the apparatus to perform the method according to any one of claims 26 to 29, to enable the apparatus to perform the method according to claim 34 or 35, to enable the apparatus to perform the method according to claim 36 or 37, to enable the apparatus to perform the method according to any one of claims 38 to 40, or to enable the apparatus to perform the method according to claim 41 or 42.

45. A computer program product, wherein the computer program product comprises instructions used to perform the method according to any one of claims 26 to 29, the computer program product comprises instructions used to perform the method according to claim 34 or 35, the computer program product comprises instructions used to perform the method according to claim 36 or 37, the computer program product comprises instructions used to perform the method according to any one of claims 38 to 40, or the computer program product comprises instructions used to perform the method according to claim 41 or 42.

46. A computer-readable storage medium, wherein the computer-readable storage medium stores a computer program; and when the computer program is run on a computer, the computer is enabled to perform the method according to any one of claims 26 to 29, the computer is enabled to perform the method according to claim 34 or 35, the computer is enabled to perform the method according to claim 36 or 37, the computer is enabled to perform the method according to any one of claims 38 to 40, or the computer is enabled to perform the method according to claim 41 or 42.
